# EUROPÄISCHE PATENTSCHRIFT

(11) **EP 1 596 141 B1**
(45) Veröffentlichungstag und Bekanntmachung des Hinweises auf die Patenterteilung: **24.11.2010**
(21) Anmeldenummer: 05010312.6
(22) Anmeldetag: 12.05.2005
(51) Int. Cl.: F25B 15/00

(54) **Arbeitsverfahren einer Sorptionsanlage**
Working method for a sorption apparatus
Mise en oeuvre d'un appareil à sorption

(30) Priorität: 12.05.2004 DE 102004023403; 18.08.2004 DE 102004039997
(43) Veröffentlichungstag der Anmeldung: 16.11.2005
(73) Patentinhaber: von Reth, Anno, Dr., 33102 Paderborn (DE)
(72) Erfinder: von Reth, Anno, Dr., 33102 Paderborn (DE)

(56) Entgegenhaltungen:
- DD-A1- 251 195
- DE-A1- 10 151 001

## Beschreibung

Die Erfindung betrifft Arbeitsverfahren einer Sorptionsanlage für ein Zweistoffgemisch mit Haupt- und Zusatzkreislauf.

Sorptionsanlagen mit Zweistoffgemischen sind seit langem Stand der Technik (Wilhelm Nibergall: Sorptions-Kältemaschinen in: Rudolf Plank: Handbuch der Kältetechnik Bd. VII (1959); Cube, Steinle, Lotz, Kunis: Lehrbuch der Kältetechnik (1997)). Bei vielen Gemischen weist das Sorptionsmittel einen für den Prozess ins Gewicht fallenden eigenen Dampfdruck auf. Bei Absorptionsflüssigkeiten wird der Dampfdruck des Sorptionsmittels um so stärker, je näher die normalen Siedepunkte von Arbeitsmittel (Arbeitsmittel) und Absorptionsmittel beieinander liegen. Es wird das Sorptionsmittel in gewissen Teilmengen zusammen mit dem Arbeitsmittel verdampft, wenn flüssigem Sorptionsgemisch Wärme zugeführt wird.

Um den ungünstigen Einfluss des mitausgetriebenen Sorptionsmittels auszuschalten, wird das ausgetriebene Dampfgemisch einer Rektifikation unterzogen.

Die dazu erforderliche Einrichtung besteht gewöhnlich aus einer Verstärkungssäule (Glockenboden- oder Siebbodenkolonne, Füllkörpersäule usw.) und einem darüber angeordneten Rücklaufkühler (Dampfkühler, Gaskühler). In der Verstärkungssäule wird in mehreren Kontaktböden im Gegenstrom eines flüssigen Rücklaufstromes mit dem aufsteigenden Dampfstrom eine stufenweise Anreicherung der leichter siedenden Fraktion erreicht. Dieser Gegenstrom setzt eine Rücklauferzeugung durch teilweise Kondensation voraus. Es kann auch ein Teilstrom aus dem Kondensat des erzeugten Arbeitsmitteldampfes in den Kolonnenkopf als Rücklauf dienen. In jüngerer Zeit wird die Rektifikation auch in liegenden Druckbehältern durchgeführt. Der Rücklauf macht gewissermaßen stets einen in sich geschlossenen Kreislauf zwischen Austreiber, Verstärkungskolonne und Rücklaufkühler durch, und der in ihm enthaltene Arbeitsmittelanteil geht für die Nutzung der Kälteleistung verloren.

Ein solches Zweistoffgemisch ist Wasser als Sorptionsmittel und Ammoniak als Arbeitsmittel. Dieses Zweistoffgemisch wird in großem Umfang zur Kälteerzeugung und auch als Wärmepumpe eingesetzt.

Bei Zweistoffgemischen mit eigenem Dampfdruck des Sorptionsmittels stehen die von den Heizflächen aufsteigenden Dämpfe annähernd im Phasengleichgewicht mit der siedenden reichen Lösung. Steigt der Anteil des Sorptionsmittels in der reichen Lösung an, so steigt auch der Anteil des Sorptionsmittels im ausgetriebenen Mischdampf an. Dies erhöht die benötigte Rücklaufinenge und die abzuführende Rücklaufwärme. Charakteristisch ist, - zumindest für die Kombination Ammoniak und Wasser - dass die erforderliche Rücklaufwärme bis zu einer mittleren Konzentration in der reichen Lösung relativ gering bleibt, dann aber mit abnehmendem Konzentrationsanteil der reichen Lösung schnell ansteigt. Nach dem Stand der Technik muss beispielsweise die bei der Rücklaufwärmeerzeugung anfallende Rücklaufwärme als eine Verlustgröße angesehen werden. Zwar wird sie häufig zur Erwärmung der reichen Lösung herangezogen, diese Erwärmung kann jedoch annähernd mit dem gleichen Effekt durch Rückführung der reichen Lösung durch den Absorber durchgeführt werden.

Durch lösungsseitige Hintereinanderschaltung von zwei Absorbern lassen sich zwei verschiedene Verdampfungsdruckniveaus aus einer Wärmequelle bedienen. Dies hat den Vorteil, dass der Arbeitsmitteldampf der tieferen Verdampfungsstufe auch unter der Bedingung der höheren mit deren geringeren Rücklaufmengenbedarf im Rektifikator erzeugt wird. Nachteilig ist, dass diese Eigenschaft nur bis zu einer Lastverteilung 50/50 vorhanden ist, darüber hinaus sinken die Wärmeverhältnisse wieder. Außerdem sollte die untere Verdampfungstemperatur nur zwischen 10 bis 30 K unterhalb der oberen liegen.

Geringe Konzentrationen der reichen Lösung sind erforderlich zur Überwindung eines großen Temperaturhubes zwischen Kondensator und Verdampfer oder zur zweimaligen Ausnutzung der im Austreiber zugeführten Wärme. Eine solche zweimalige Ausnutzung kann durch einen zusätzlich hinzugeschalteten Resorber-/Entgaserkreislauf erreicht werden.

In den Anwendungsbereichen Wärmepumpen ist prozesstechnisch ein erhöhter Druck im Austreiber erforderlich. Dadurch steigt die Rücklaufmenge - bei gleichgehaltenem Anteil des Arbeitsmittels in der reichen Lösung - weiter an.

Für viele Anwendungsbedingungen ergibt sich also eine hohe Rücklaulmenge und diese Rücklaufmenge stellt dann die größte Verlustgröße dar.

Es ist bekannt, dass mit dem sogenannten Übergreifen der Temperaturen von Austreiber und Absorber die reiche Lösung mit relativ geringem Anteil des Sorptionsmittels in den Austreibungsprozess eintritt und somit eine relativ geringe Rücklauferzeugung erforderlich wird. Der apparative Aufwand für den Wärmeaustausch ist jedoch erheblich.

Eine weitere Verlustgröße der Sorptionsanlage wird durch die unterschiedlichen Ein- und Austrittstemperaturen von armer und reicher Lösung in Austreiber und Absorber bewirkt. Im DE-Patent 499327 (1928) wird vorgeschlagen, eine kleine Teilmenge der kalten Lösung unter Umgehung des Lösungswärmetauschers dem Rektifikator zwecks Rektifikation der ausgetriebenen Dämpfe zuzuführen. Ausgeführt wurden solche Anlagen mit der kostengünstigen Technik einer direkten Berührung beider Aggregatzustände über Raschigringe. Hierbei ist die Rektifikation sehr wirkungsvoll, da sich das Dampfgemisch bis nahe auf die Eintrittstemperatur der reichen Lösung in den Rektifikator abkühlen kann. Im Lösungswärmetauscher wird reiche Lösung durch arme Lösung aufgewärmt. Da dessen Menge kleiner ist als die der reichen Lösung, muss die arme Lösung mit merklich größerer Temperaturdifferenz in den Lösungswärmetauscher aus- als eintreten, wenn die gesamte Menge der reichen Lösung auf Austreibertemperatur aufgewärmt werden soll. Die Rückgewinnung von Rückkühlwärme kann mit dieser Methode maximal die Differenz zwischen der Wärmekapazität von armer und reicher Lösung im genannten Wärmetausch ausgleichen. Zur Wärmerückgewinnung muss die arme Lösung durch den Austreiber rückgeführt werden, die Wärmeabgabe ist jedoch durch die geringe Abkühlspanne im Austreiber begrenzt. Bei Tiefkühlanlagen mit den Arbeitsstoffen Ammoniak und Wasser fällt die Rückkühlwärme deutlich größer aus als die durch Rückführung der armen Lösung im Austreiber rückgewinnbare Wärme.

Rücklaufkühler arbeiten im Bereich der Dampfkühlung mit sehr schlechtem Wärmeübergang, die Rücklauferzeugung führt daher zu aufwändigen technischen Lösungen. Es ist vorgeschlagen worden, die Teilkondensation des Arbeitsmitteldampfes innerhalb des Rektifikators in einem gekühlten Flüssigkeitsbad (mit erheblich besseren Bedingungen für die Wärmeübertragung) durchzuführen (DE 102 19 263 A1). Eine Verbesserung des Prozesswirkungsgrades tritt jedoch nicht gleichzeitig ein.

Gleiches gilt ebenfalls für einen anderen Vorschlag, in einem als Bypass arbeitenden Rücklaufresorber d.h. auf Hochdruckniveau - einen Teilstrom der reichen Lösung mittels absorbiertem Arbeitsmitteldampf hoch aufzusättigen und als Rücklauf dem Rektifikator zuzuführen (DD WP 251 195). Es wird bei diesem Vorschlag berichtet, dass die Wärmedurchgangszahlen im Rücklaufabsorber ganz erheblich höher - 3 bis 4,2 mal so hoch - liegen als bei einem Dephlegmator und die Baukosten entsprechend günstiger ausfallen.

Es ist ein weiteres Verfahren bekannt, bei dem ebenfalls angereicherte Lösung in den Rektifikator eingeleitet wird, das bei Tiefkühlanlagen zu einer erheblichen Steigerung des Prozesswirkungsgrades führt ("High Temperatur-Lift Ammonia-Water Heat Pumps" zu finden unter www.glue.umd.edu/~herold/projects/prosumaw.html): Die angereicherte Lösung wird in einem auf Mitteldruck stehenden Absorber gebildet. In ihm wird Arbeitsmitteldampf absorbiert, der abgetrennt wird, indem die Arbeitsmittelflüssigkeit auf Mitteldruck gedrosselt wird. Dieser Arbeitsmitteldampf trägt nicht zur Kälteerzeugung bei. Die absorbierende Lösung wird - auf Niederdruckniveau - in einem Reversen Rektifikator gebildet, indem ein Teilstrom der reichen Lösung nach Erwärmung im Lösungswärmetauscher unter Verarbeitung eines Teils des Niederdruckdampfes unter Wärmezufuhr weiter angereichert wird. Der verarbeitete Niederdruckdampf ist im (Niederdruck-)Verdampfer unter Kälteerzeugung gebildet worden und erhöht dadurch den Gesamtwirkungsgrad der Anlage. Von Nachteil ist, dass mehrere zusätzliche Apparate und zwei zusätzliche Lösungspumpen erforderlich sind. Hierbei ist ein Reverser Rektifikator unüblich. Die Prozessschaltung ist auf die Erzeugung von Kälte auf einem einheitlichen Temperaturniveau ausgerichtet.

Es sind des weiteren Verfahren bekannt, die mit mehreren Kreisläufen arbeiten, bei denen Wärme aus dem Absorber und/oder Kondensator eines Kreislaufes höheren Druckniveaus auf den Austreiber eines Kreislaufes niedrigeren Druckes übertragen wird (F. Ziegler: Trends der Sorptionskältetechnik in: "Luft- und Kältetechnik" S.140-144, Nr. 3/2002).

Es ist die Aufgabe der Erfindung, die genannten Nachteile zu umgehen und weiterhin folgendes zu erreichen:

Den Absorptionsprozess so zu führen, dass
- die Rückkühlwärme reversibel genutzt wird,
- die technisch aufwändige Rücklaufkühlung ganz oder weitgehend vermieden wird,
- das Verfahren mit erprobten Apparaten der Zweistofftechnik erfolgt,
- das Verfahren auf die gesamte Breite der Absorptionsanwendung sinnvoll einsetzbar ist, und
- insbesondere die zugeführte Wärme gegenüber dem Stand der Technik in einem höheren Maße genutzt wird.

Die Lösung der Aufgabe findet sich in vier Nebenansprüchen, in denen jeweils ein erfindungsgemäßes Verfahren formuliert wird. In den abhängigen Ansprüchen werden weitere vorzugsweise Ausgestaltungen der Erfindung formuliert.

Erfindungsgemäß wird bei einem ersten Verfahrensvorschlag zu einem grundsätzlich nach dem Stand der Technik gebildeten Kreislauf - im folgenden Hauptkreislauf genannt - ein Zusatzkreis hinzugefügt mit folgenden wesentlichen charakteristischen Merkmalen:
- Das obere Druckniveau des Zusatzkreises entspricht dem des Austreibers und Rektifikators des Hauptkreislaufes.
- In einem Mitteldruckverdampfer wird die im Zusatzkreis im Kondensator gebildete nahezu reinen Zusatzkreisarbeitsmittelflüssigkeit verdampft.
- In einem Mitteldruckabsorber wird der im Mitteldruckverdampfer gebildete Zusatzkreismitteldruckdampf absorbiert.
- Mit einer ersten Zusatzkreisdrossel wird arme Zusatzkreislösung auf Absorptionsdruck gedrosselt.
- Mit einer ersten Zusatzkreislösungspumpe wird der Druck von reicher Zusatzkreislösung auf Hochdruckaustreiberdruck angehoben.
- Mit einer zweiten Zusatzkreisdrossel wird die nahezu reine Zusatzkreisarbeitsmittelflüssigkeit auf Verdampferdruck gedrosselt.
- Das Zweistoffgemisch wird im Zusatzkreislauf durch den Rektifikator geführt,
wobei
- im Rektifikator die vom Hochdruckaustreiber kommenden Mischdämpfe durch Wärme- und Massenaustausch mit dem im Zusatzkreis geführten Zweistoffgemisch teilweise kondensiert werden und Rücklaufflüssigkeit des Hauptkreislaufes zumindest weitgehend gebildet wird,
- und abweichend zum Arbeitsverfahren einer Sorptionsanlage mit einem einzigen Kreislauf, bei dem Arbeitsmittelflüssigkeit aus dem Hauptkreislauf in den Rektifikator zugeführt und verdampft und gegebenenfalls auch kalte reiche Lösung zugeführt und erwärmt wird, aus dem im Zusatzkreis geführten Zweistoffgemisch Arbeitsmitteldampf ausgetrieben und das im Zusatzkreis geführte Zweistoffgemisch erwärmt wird.

Der Grundgedanke des erfindungsgemäßen Verfahrens kann in vier verschiedenen Schaltungstypen umgesetzt werden, wobei in einem ersten Arbeitsverfahren ein Schaltungstyp I eingesetzt wird, der folgende wesentlichen Merkmale aufweist:
- für die reiche Zusatzkreislösung wird ein höherer Anteil des Arbeitsmittels als für die reiche Lösung des Hauptkreises festgelegt,
- die reiche Zusatzkreislösung wird in das kalte Ende des Rektifikators eingespeist,
- die arme Zusatzkreislösung wird aus dem warmen Ende des Rektifikators ausgespeist,
- der nahezu reine Hochdruckdampf wird im Zusatzkreis vom Rektifikator bis zu dem Kondensator zur Kondensation geleitet,
- die nahezu reine Zusatzkreisarbeitsmittelflüssigkeit wird vom Kondensator zum Mitteldruckverdampfer geleitet,
- der Zusatzkreismitteldruckdampf wird vom Mitteldruckverdampfer zum Mitteldruckabsorber geleitet,
- die arme Zusatzkreislösung im Zusatzkreis wird zu dem Mitteldruckabsorber über die erste Zusatzkreisdrossel geleitet,
- die reiche Zusatzkreislösung wird unterstützt von der ersten Zusatzkreislösungspumpe zurück zum Rektifikator geleitet,
- der Rektifikator ist auf die Rektifikation im Gegenstrom zum Zweistoffgemisch im Zusatzkreis ausgelegt,
- wobei der Druckunterschied zwischen Rektifikator und Mitteldruckabsorber kleiner als zwischen Rektifikator und Niederdruckabsorber eingestellt wird.

Mit dem Arbeitsverfahren der Schaltung des Typs I wird Kälte auf zwei unterschiedlichen Temperaturniveaus erzeugt, wobei im Mitteldruckverdampfer des Zusatzkreislaufes das Temperaturniveau höher liegt als im Niederdruckverdampfer des Hauptkreislaufes.

Eine Variante des Arbeitsverfahrens wird in einer Schaltung des Typs II mit folgenden weiteren bzw. abweichenden wesentlichen Merkmalen umgesetzt:
- die arme Zusatzkreislösung wird aus dem warmen Ende des Rektifikators in den Hochdruckaustreiber eingeleitet, und
- die Stoffströme von armer Zusatzkreislösung und reicher Lösung des Hauptkreislaufes werden aus dem Ablauf des Niederdruckabsorbers oder nach dem Niederdruckabsorber getrennt.

Mit der Schaltung des Typs II wird ebenfalls Kälte auf zwei unterschiedlichen Temperaturniveaus erzeugt, wobei die Wärmeübertragung im Lösungswärmetauscher technisch einfacher zu gestalten ist, während mit der Schaltung des Typs I ein größeres Gewicht auf Abgabe von Kälte auf dem höheren Temperaturniveau gelegt werden kann. Beide Schaltungen können angewandt werden, wenn im Hauptkreislauf zwischen (Mitteldruck-)Verdampfer und (Niederdruck-)Absorber ein Resorptionsteilkreislauf eingeschoben wird. Diese Verfahrensvariante bringt eine große Steigerung des Wärmeverhältnisses im Vergleich einer Anlage ohne den Zusatzkreislauf. Bei der Anwendung der Erfindung als Wärmepumpe ist diese Verfahrensvariante besonders sinnvoll, soweit sie unter der Randbedingung eines nur begrenzt hohem Temperaturhubs ausführbar ist.

Ein weiteres Anliegen ist eine Nutzung der bei der Rektifikation anfallenden Rückkühlwärme dergestalt, dass Nutzkälte sowohl aus dem Hauptkreislauf als auch im Zusatzkreis nur auf dem Tieftemperaturniveau abgegeben wird. Erfindungsgemäß sind hierfür zwei weitere Schaltungstypen vorgesehen, in denen die bei der Rektifikation anfallende Rückkühlwärme eingesetzt wird, um den Temperaturhub zwischen Austreiber und Niederdruckabsorber mittels zweimaliger Wärmezufuhr zu überwinden.

Eine weitere Variante des Arbeitsverfahrens wird in einer Schaltung des Typs III umgesetzt, wobei dieses Verfahren gegenüber der Schaltung des Typs II folgende weiteren bzw. abweichenden wesentlichen Merkmale aufweist:
- das flüssige Zusatzkreisarbeitsmittel wird nach dem Kondensator in zwei Teilströme zum Durchlauf durch den Mitteldruckverdampfer bzw. durch einen Zusatzkreisniederdruckabsorber geteilt und im Mitteldruckabsorber wieder vereint, wobei nur für den zweiten Teilstrom ein neunen Laufweg bestimmt wird,
- das flüssige Arbeitsmittel des Hauptkreislaufes und des zweiten der beiden Teilströme des Zusatzkreis werden gemeinsam über die erste Drossel dem Niederdruckverdampfer zugeleitet und dort verdampft,
- der Zusatzkreisniederdruckdampf dieses zweiten Teilstroms wird einem Zusatzniederdruckabsorber zugeführt und dort von der armen Zusatzkreislösung absorbiert,
- das Zweistoffgemisch dieses zweiten Teilstroms des Zusatzkreises durchläuft den Zusatzkreisniederdruckabsorber, um die darin abzuführende Wärme an den Mitteldruckverdampfer zu übertragen,
- die im Zusatzkreisniederdruckabsorber angereicherte Zusatzkreislösung wird unterstützt durch eine zweite Zusatzkreislösungspumpe zu dem Mitteldruckabsorber geleitet,
- die beiden Teilströme sind so bemessen, dass ein vollständiger Wärmeaustausch zwischen Zusatzkreisniederdruckabsorber und dem Mitteldruckverdampfer gegeben ist.

Das Arbeitsverfahren mit der Schaltung des Typs III kann auch grundsätzlich oder zeitweilig mit einem Arbeitsverfahren der Schaltung des Typs II kombiniert werden, wobei die Betriebsweise zwischen beiden Schaltungen - in Form einer Mischschaltung - variiert werden kann.

Eine letzte Variante des Arbeitsverfahrens wird in einer Schaltung des Typs IV umgesetzt, wobei dieses Verfahren gegenüber der Schaltung des Typs II mit folgenden weiteren bzw. abweichenden wesentlichen Merkmalen ausgeführt wird:
Das Zweistoffgemisch wird im Hauptkreislauf durch mindestens folgende wesentlichen Aggregate geführt:
- in einem Lösungswärmetauscher des unteren Temperaturbereichs und in einem Lösungswärmetauscher des oberen Temperaturbereichs wird jeweils Wärme zwischen dem Hauptstrom armer und der Hauptstrom reicher Lösung ausgetauscht,
- in einem unter Mitteldruck stehenden Separator wird ein erster Teilstrom armer Lösung in Mischdampf und verbleibende Lösung getrennt,
- in einer Abtriebsäule wird dieser Mischdampf im Gegenstrom zum zweiten Teilstrom unterkühlter reicher Lösung rektifiziert.

Für das Zweistoffgemisch wird im Hauptkreislauf drei Teilströme gebildet, deren Mengen wie folgt bestimmt werden:
- die Menge des ersten Teilstroms armer Lösung wird so festgelegt wird, dass im Separator die im Mitteldruckabsorber benötigte Menge an Mitteldruckdampf abgetrennt wird,
- die Menge des ersten Teilstroms reicher Lösung wird so festgelegt, dass er die Rückkühlwärme aufnehmen kann, die bei der Rektifikation des im Separator abgetrennten Mischdampfes anfällt,
- die Menge des zweiten Teilstroms reicher Lösung wird so festgelegt, dass der verbleibende Hauptstrom reicher Hauptkreislösung von dem Hauptstrom armer Lösung im Lösungswärmetauscher des oberen Temperaturniveau bis auf Siedetemperatur erwärmt werden kann.
Das Verfahren wird im Hauptkreislauf im wesentlichen mit folgenden besonderen Merkmalen betrieben:
- ein erster Teilstrom armer Lösung wird vom Hochdruckaustreiber über eine vierte Drossel in den Separator geleitet,
- im Separator wird aus diesem druckentlasteten ersten Teilstrom Mischdampf abgetrennt,
- ein erster Teilstrom reicher Lösung wird nach einer ersten Lösungspumpe vom Hauptstrom der reichen Lösung abgetrennt und mittels einer fünften Drossel auf das Druckniveau des Separators gebracht und in die Abtriebssäule eingeleitet,
- aus dem vom Separator kommenden Mischdampf und dem im Gegenstrom geführten ersten Teilstrom reicher Lösung wird in der Abtriebssäule mittels Rektifikation nahezu reiner Mitteldruckdampf und verbleibende Lösung gebildet,
- diese Lösung wird in den Separator eingeleitet,
- dieser rektifizierte Mitteldruckdampf wird dem Mitteldruckabsorber zur Absorption zugeleitet,
- nach dem Lösungswärmetauscher des unteren Temperaturbereichs wird ein zweiter Teilstrom reicher Hauptkreislösung vom Hauptstrom abgetrennt und in den heißen Teil des Rektifikators zur Vervollständigung der Rektifikation eingeleitet,
- der Hauptstrom reicher Hauptkreislösung wird, unterstützt durch die erste Lösungspumpe, unter Wärmeaufnahme über den Weg Mitteldruckabsorber und beide Lösungswärmetauscher in den Hochdruckaustreiber geleitet,
- der Hauptstrom armer Lösung wird mit einer dritten Drossel auf Mitteldruck abgesenkt und mit dem aus dem Separator ablaufenden dritten Teilstrom armer Lösung vor Eintritt in den Lösungswärmetauscher des unteren Temperaturbereichs vereint und mittels einer vierten Drossel vom Mitteldruckniveau auf Niederdruckniveau gedrosselt und in den Niederdruckabsorber geleitet.

Das Verfahren nach dieser Variante weicht im Zusatzkreis gegenüber der Schaltung des Typs II wie folgt ab: das flüssige Zusatzkreisarbeitsmittel des Hauptkreislaufes und des Zusatzkreises werden gemeinsam über die erste Drossel dem Niederdruckverdampfer zugeleitet, dort verdampft und dem Niederdruckabsorber zur Absorption zugeleitet.

Das Arbeitsverfahren mit der Schaltung des Typs IV ist besonders geeignet zur Erzeugung von Tieftemperaturkälte, da im Vergleich zum Stand der Technik das Wärmeverhältnis deutlich gesteigert und die Kosten gleichzeitig gesenkt werden.

Mit jeder Variante der erfindungsgemäßen Verfahren ergeben sich die Vorteile, dass entsprechend dieser Bildung von Rücklaufflüssigkeit im Rektifikator die Erzeugung von nahezu reiner Arbeitsmittelflüssigkeit durch Teilkondensation des rektifizierten Arbeitsmitteldampfes außerhalb des Rektifikators reduziert oder vermieden wird und deren Einleitung in den kalten Teil des Rektifikators ebenso reduziert oder vermieden wird.

Im folgenden wird die Erfmdung an Hand von Zeichnungen erläutert. Es werden 10 Figuren beigefügt.

Die Figuren zeigen im Einzelnen:
Fig. 1 eine Zweistoffsorptionsanlage nach dem Stand der Technik mit dem erfindungsgemäß erweiterten Zusatzkreis,
Fig. 2 Ausgleich des geringeren Temperaturhubs des Zusatzkreises zwischen Verdampfer und Absorber mittels Kompressionskreislauf,
Fig. 3 Überwindung des Temperaturhubs zwischen dem Niederdruckverdampfer des Hauptkreislaufes und dem Mitteldruckverdampfer des Zusatzkreises im Rahmen eines Sorptionsprozesses,
Fig. 4 Darstellung des bekannten Verfahrens der Unterkühlung des flüssigen Arbeitsmittels des Hauptkreislaufes durch Niederdruckdampf des Hauptkreislaufes in einem Wärmetauscher,
Fig. 5 Beschreibung der Erfindung in einem Diagramm "Mindestrücklaufwärme vs. Konzentrationsgrad der reichen Lösung",
Fig. 6 Erweiterung des Zusatzkreises dahingehend, dass dessen arme Lösung in den Austreiber eingeleitet wird,
Fig. 7 bekannte zweimalige Nutzung der dem Prozess zugeführten Wärme, indem zwischen Verdampfer und Absorber des Hauptkreislaufes ein Resorptionsteilkreislauf eingeschoben wird,
Fig. 8 zweimalige Nutzung der dem Prozess zugeführten Wärme erweitert um eine interne Abwärmenutzung,
Fig. 9 lösungsseitiges Hintereinanderschalten von zwei Absorbern im Zusatzkreis, gekoppelt jeweils mit einem mechanischen Kompressionskreislauf, und
Fig. 10 Erzeugung von Mitteldruckdampf aus druckentlasteter armer Hauptkreislösung und Zuführung an den Mitteldruckabsorber des Zusatzkreises.

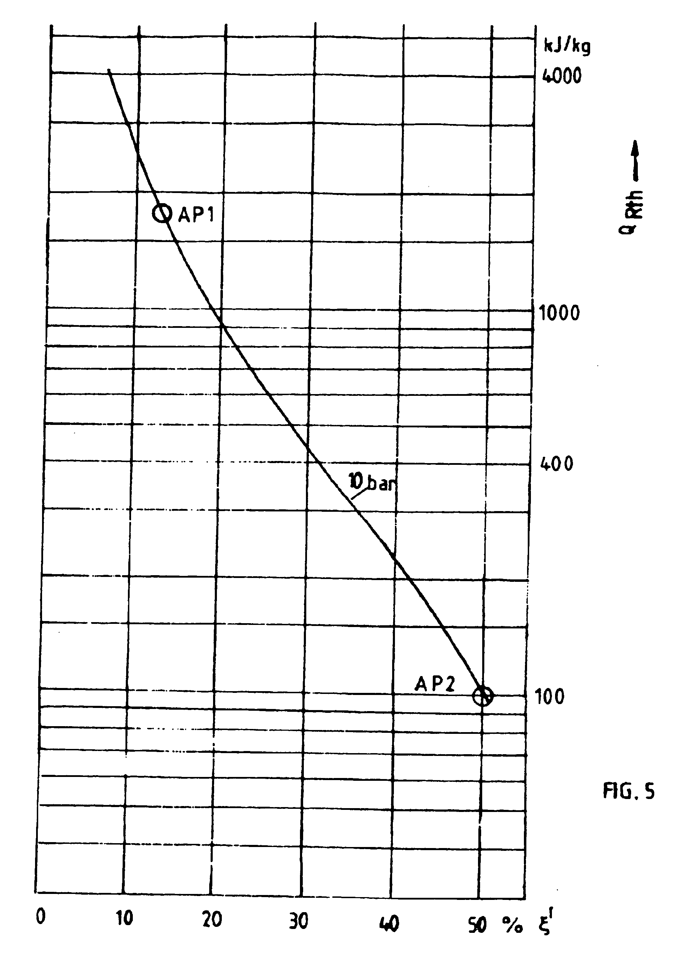

In der Figur 5 wird die energetische Zielsetzung der Erfindung dargestellt. In den anderen Figuren sind zur besseren Lesbarkeit die armen und reichen Lösungen jeweils in Hauptkreislauf und Zusatzkreis mit unterschiedlichen Signaturen dargestellt. Zusätzlich sind in einigen Zeichnungen die Kreisläufe im log p vs. 1/T-Diagramm beigefügt. Hierbei wird der Hauptkreislauf in voller Strichstärke, der Zusatzkreis punktiert dargestellt. Es sind nach dem Stand der Technik unterschiedliche Ausführungsformen des Rektifikators bekannt. Vereinfachend wird der Rektifikator stets in Form einer mit mehreren Böden ausgestatteten Verstärkungssäule dargestellt. Zur Kennzeichnung der Aggregate und Stoffe des Zusatzkreises bzw. Resorptionsteilkreislaufes werden jeweils "Zusatz"- bzw. "Resorption"-vorangestellt, bei denen des Hauptkreislaufes wird auf eine solche weitere Bezeichnung verzichtet.

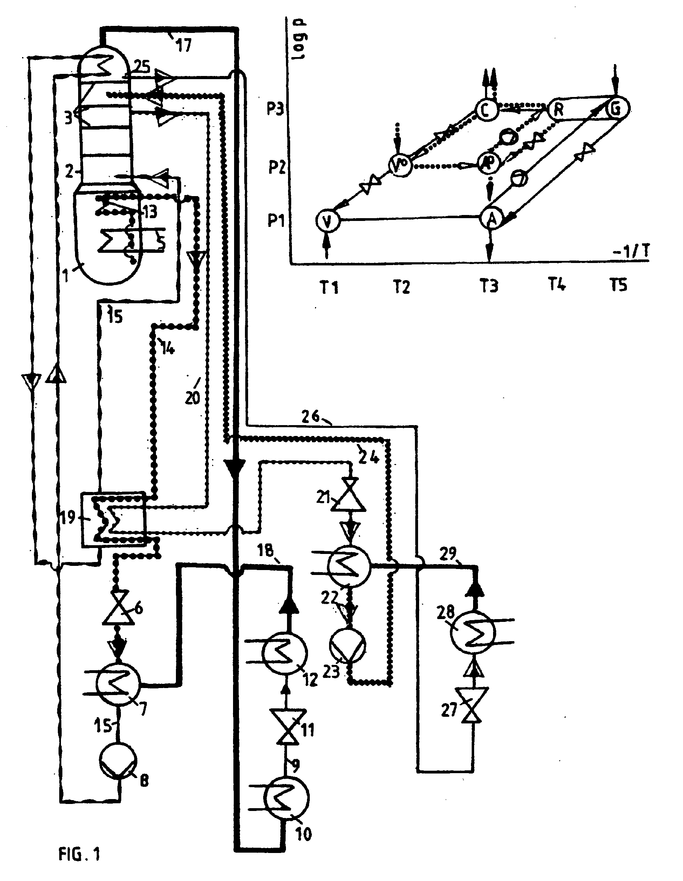

In der Figur 1 ist eine Zweistoffsorptionsanlage nach dem Stand der Technik (wie bereits ausgeführt als Hauptkreislauf bezeichnet) dargestellt und um den erfindungsgemäßen Zusatzkreis mit einer Schaltung des Typs I erweitert. Im Hauptkreislauf wird im Hochdruckaustreiber (1) durch ein Wärmeträgermedium (5) von außen Wärme zugeführt. Der erzeugte Mischdampf von Arbeitsmittel und Sorptionsmittel wird dem Rektifikator (2) zugeleitet und in mehreren Austauschstufen (3) nahezu reiner Arbeitsmitteldampf erzeugt. Dieser Dampf wird unter Wärmeabgabe im Rücklaufkühler (4) teilweise und im Kondensator (10) des Hauptkreislaufes vollständig verflüssigt. Die Menge der nahezu reinen Arbeitsmittelflüssigkeit (9) wird mittels einer Flüssigkeitsdrossel (11) auf das Niederdruckniveau gebracht und unter Wärmeaufnahme in einem Niederdruckverdampfer (12) verdampft. Der so erzeugte Niederdruckdampf (18) wird unter Wärmeabgabe im Niederdruckabsorber (7) von der armen Lösung (arm an Arbeitsmittel) (14) aufgenommen. Die so gebildete reiche Lösung (15) wird mittels einer ersten Lösungspumpe (8) auf das Druckniveau des Hochdruckaustreiber gebracht. Um Wärmeabgaben des Prozesses nach außen zu verringern, wird die reiche Lösung (15) zunächst (16) durch den Rücklaufkühler (4) geführt (z.B. mittels Rohrleitung) und aufgewärmt, dann im Lösungswärmetauscher (19) weiter aufgewärmt. Nach dem Lösungswärmetauscher (19) wird die reiche Lösung (15) in den Hochdruckaustreiber (1) geleitet. Im Hochdruckaustreiber (1) wird durch Wärmezufuhr (5) der Flüssigkeit Arbeitsmittel entzogen. Die so entstehende arme Lösung (14) wird zur Wärmeabgabe im Hochdruckaustreiber (1) rückgeführt (13), dann im Lösungswärmetauscher (19) abgekühlt, auf das Niederdruckniveau des Hauptkreislaufes mittels einer zweiten Drossel (6) abgesenkt und im Niederdruckabsorber (7) unter Wärmeabgabe wieder angereichert.

Die im Rücklaufkühler (4) durch Teilkondensation des Arbeitsmitteldampfes gebildete Arbeitsmittelflüssigkeit wird überwiegend oder gänzlich nicht dem Rektifikator zugeführt, sondern mittels Ventil abgeleitet (25). Die abgeleitete Zusatzkreisarbeitsmittelflüssigkeit (26) wird mittels einer zweiten Zusatzkreisdrossel (27) auf Mitteldruckniveau gebracht und dem Mitteldruckverdampfer (28) zugeführt. Dort wird sie unter Wärmeaufnahme auf mittleres Temperaturniveau verdampft. Der Zusatzkreismitteldruckdampf (29) wird in einem unter gleichem Druck stehenden Mitteldruckabsorber (22) unter Wärmeabgabe von der armen Zusatzkreislösung (20) absorbiert. Die arme Zusatzkreislösung (20) wird aus dem Ablauf der ersten Austauschstufe des Rektifikators (2) entnommen. Dies kann durch ein Regelungsventil gesteuert werden. Die arme Zusatzkreislösung (20) wird mittels einer ersten Zusatzkreisdrossel (21) auf mittleres Druckniveau abgesenkt und dem Mitteldruckabsorber (22) zugeführt. Die im Mitteldruckabsorber (22) gebildete reiche Zusatzkreislösung (24) wird mittels einer ersten Zusatzkreislösungspumpe (23) auf das Hochdruckniveau des Rektifikators (2) gebracht und in dessen oberen kalten Teil eingeleitet. In der obersten (relativ kalten) Stufe des Rektifikators findet ein Stoff- und Wärmeaustausch zwischen der (eingeleiteten) reichen Zusatzkreislösung und dem von unten zugeleiteten Gemischdampf statt, der - wie bekannt - bewirkt, dass ein Teil des Gemischdampfes kondensiert wird.

Dieser wird nach unten abgegeben und ersetzt hierbei die sonst (nach dem Stand der Technik) notwendige Zuleitung flüssigen Arbeitsmitteldampfes aus der Rückkühlung vollständig oder weitgehend.

Das Druck-Temperatur-Diagramm verdeutlicht, dass beide Kreisläufe im Hochdruckaustreiber (= G) und Rektifikator (= R) sowie Kondensator (= C) den gleichen Druck (P3) besitzen, der Zusatzkreis (punktierte Linie) aber im Mitteldruckverdampfer (= V°) und Mitteldruckabsorber (= A°) einen höheren Druck (P2) als der Niederdruckverdampfer (= V) und der Niederdruckabsorber (= A) im Hauptkreislauf (P1) (Strich-Linie) besitzt. Dadurch liegt das Temperaturniveau im Mitteldruckverdampfer (= V°) höher (T2) als im Niederdruckverdampfer (= V) des Hauptkreislaufes (T1). Durch einen höheren Anteil von Arbeitsmittel in den Zusatzkreislösungen als in den Hauptkreislösungen - erkennbar durch den nach links verschobenen Linienverlauf- kann das Temperaturniveau in den Absorbern (= A und A°) wieder gleich sein. Externe Wärmezufuhr findet im Hauptkreislauf im Hochdruckaustreiber (= G) und Niederdruckverdampfer (= V), im Zusatzkreis im Mitteldruckverdampfer (= V°) statt, externe Wärmeabgabe findet in den jeweiligen Absorbern (= A bzw. A°) und gemeinsam für beide Kreisläufe im Kondensator (= C) statt.

Durch den Zusatzkreis wird im Anwendungsfall Kälteerzeugung Kälte auf einem zweiten im Vergleich zum Hauptkreislauf weniger tiefen Temperaturniveau erzeugt - und zwar zusätzlich zu einer Schaltung mit nur einem Kreislauf. Im Vergleich zur zweistufigen Absorption mittels lösungsseitiger Hintereinanderschaltung kann durch die Erfindung ein weitaus höherer Anteil der Verdampfung auf dem tieferen Temperaturniveau stattfinden. Eine Begrenzung des Temperaturabstandes zwischen den beiden Verdampfungstemperaturen ist nicht mehr erforderlich.

Im Anwendungsfall Wärmepumpe ist wegen des im Zusatzkreis geringeren überbrückbaren Temperaturhubes eine einschränkende Bedingung für das Temperaturniveau im Verdampfer und Absorber gegeben. Die gewählte Auskoppelung der Arbeitsmittelflüssigkeit aus dem Rückkühler und der armen Lösung für den Zusatzkreis ist besonders zur Nachrüstung bestehender Anlagen geeignet.

In den folgenden Figuren sind gleiche Anlagenteile, die in vorausgegangenen Figuren beschrieben sind, mit gleichen Ziffern gekennzeichnet. Soweit Dampf oder Flüssigkeit der beiden Kreisläufe vereint geleitet werden, wird der Ziffer eine 1 oder 2 vorangestellt (z.B. 117 statt 17). Es werden nur die Veränderungen der Kreislaufschaltungen gegenüber bereits dargestellten beschrieben.

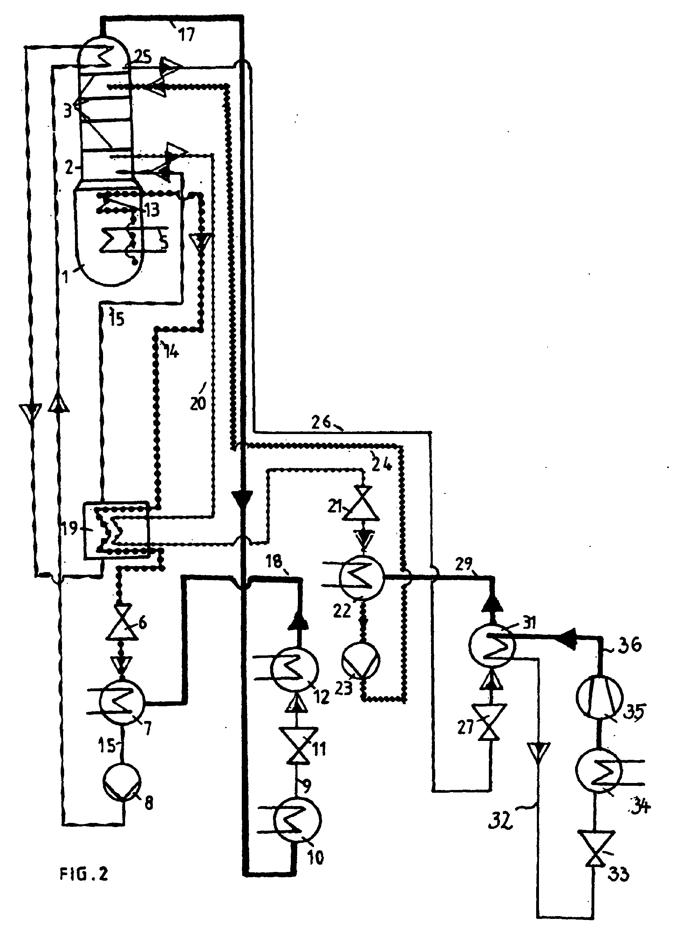

In der Figur 2 ist dargestellt, wie der geringere Temperaturhub des Zusatzkreises zwischen Mitteldruckverdampfer und Kondensator (im Vergleich zum Hauptkreislauf) mittels eines ersten Kompressionskreislaufes ausgeglichen wird. Hierzu wird der Mitteldruckverdampfer durch einen Kaskadenwärmetauscher (31) ersetzt. In ihm findet eine Wärmeübertragung vom Kondensationsvorgang des Kompressionskreislaufes an den Verdampfungsvorgang des Zusatzkreises statt. Die in diesem Kondensationsvorgang erzeugte erste Kompressionskreisarbeitsmittelflüssigkeit (32) wird mit einer erste Kompressionskreisdrossel (33) auf niedrigen Druck gebracht und dem ersten Kompressionskreisverdampfer (34) zugeleitet und dort unter Wärmeaufnahme verdampft. Der erzeugte erste Kompressionskreisdampf (36) wird mit ersten mechanischem Kompressor (35) auf den höheren Druck gebracht und dem erwähnten ersten Kaskadenwärmetauscher zugeleitet (31). In der Regel werden für den Kompressionskreislauf dieselben Arbeitsmittel/Sorptionsmittel wie für den Hauptkreislauf und Zusatzkreis verwendet. Die dem mechanischen Kompressor zuzuführende Energie ist erheblich geringer, als wenn der volle Temperaturhub zwischen Hochdruckaustreiber und Niederdruckabsorber (für eine gleiche Kälteleistung) zu überwinden wäre.

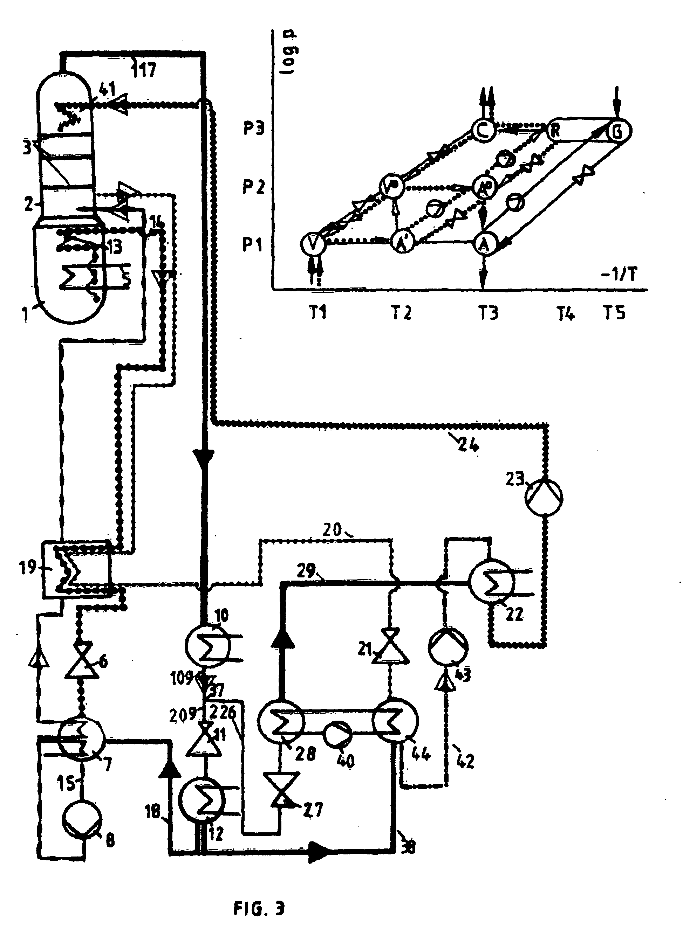

In der Figur 3 wird der Temperaturhub zwischen dem Niederdruckverdampfer und dem Mitteldruckverdampfer im Rahmen eines Sorptionsprozesses überwunden (Schaltungstyp III). Im Druck-Temperatur-Diagramm ist erkennbar, dass ein erster Teilstrom von Zusatzkreisarbeitsmittelflüssigkeit bis auf Mitteldruckniveau (P2), ein zweiter Teilstrom bis auf Niederdruckniveau (P1) abgesenkt wird. Dem Zusatzkreisniederdruckabsorber (= A') auf dem Temperaturniveau T2 wird nur ein Teilstrom des Zusatzkreises zugeführt. Dessen Temperaturniveau (T2) liegt unterhalb des Temperaturniveaus (T3) des Mitteldruckabsorbers (= A°) des Zusatzkreises. Die Anhebung auf das Temperaturniveau (T3) erfolgt zunächst durch Wärmeübertragung an den Mitteldruckverdampfer (= V°) und dann durch Absorption im Mitteldruckabsorber (= A°). Der Mitteldruckverdampfer (= V°) nimmt damit keine Wärme von außen auf. Der Zusatzkreis kann im Niederdruckverdampfer (= V) auf niedrigem Temperaturniveau (T1) externe Wärme aufnehmen, das geht jedoch auf Kosten der Menge, da nur ein Teil des Zusatzkreises durch den Niederdruckverdampfer geführt wird.

In der Figur 3 wird der Arbeitsmittelhochdruckdampf (117) von Hauptkreislauf und Zusatzkreis gemeinsam in einem Kondensator (10) kondensiert. Aus der Hauptkreis/ Zusatzkreisarbeitsmittelflüssigkeit (109) wird ein erster Teilstrom von Zusatzarbeitsmittelflüssigkeit (226) danach mittels Ventil (37) abgetrennt. Die verbleibende Hauptstrom von Hauptkreis/Zusatzkreisarbeitsmittelflüssigkeit (209) wird mittels einer Flüssigkeitsdrossel (11) gedrosselt und dem Niederdruckverdampfer (12) zugeleitet. Dem Niederdruckverdampfer (12) wird sowohl Niederdruckdampf (18) des Hauptkreislaufes als auch Zusatzkreisniederdruckdampf (38) - als zweite Teilstrom des Zusatzkreises - entnommen und einem Zusatzkreisniederdruckabsorber (44) zugeführt und dort von der armen Zusatzkreislösung (20) absorbiert wird. Abweichend von den bisher beschriebenen Kreislaufschaltungen wird die zweite Teilmenge der armen Zusatzkreislösung (20) auf das Niederdruckniveau des Hauptkreislaufes mittels der ersten Zusatzkreisdrossel (21) abgesenkt. Die im Zusatzkreisniederdruckabsorber (44) abzuführende Wärme wird an den Mitteldruckverdampfer (28) übertragen - hier durch einen Flüssigkeitskreislauf mit Umwälzpumpe (40) bewerkstelligt. Zwingend sind die Temperaturniveaus von Zusatzkreisniederdruckabsorber (44) und Mitteldruckverdampfer (28) sowie die beiden Teilströme (44) und Mitteldruckverdampfer (28) sowie die beiden Teilströme (226, 38) des Zusatzkreises so aufeinander abzustimmen, dass die Wärmeübertragung möglich ist. Die in dem Zusatzkreisniederdruckabsorber (44) angereicherte Zusatzkreislösung (42) wird mittels einer zweiten Zusatzkreislösungspumpe (43) auf das Mitteldruckniveau des Zusatzkreises gebracht und dem Mitteldruckabsorber (22) zugeleitet.

Im Druck-Temperatur-Diagramm ist ablesbar, dass die arme Zusatzkreislösung und die reiche Lösung in ihren Kreisläufen in entgegengesetzter Richtung geführt werden. Das wird zu einem besseren Wärmeaustausch der Lösungen genutzt. Im Wärmeaustausch in den Böden (3) des Rektifikators (2) wird die arme Zusatzkreislösung (20) erwärmt. Die arme Zusatzkreislösung (20) wird hierfür erst aus dem (untersten) wärmsten Teil des Rektifikators (2) entnommen. Indem die arme Zusatzkreislösung (20) durch den Lösungswärmetauscher (19) geführt wird, wird sie abgekühlt und Wärme an die reiche Lösung (15) - und zwar zusätzlich zur Übertragung von der armen Lösung (14) - übertragen. Dadurch wird Wärmekapazität der armen Lösung (14) frei. Sie wird mittels der bekannten Technik der Rückführung (13) im Hochdruckaustreiber (1) dazu genutzt, die von außen zuzuführende Wärmemenge (5) zu verringern. Notwendig ist allerdings, die weitere bekannte Technik zur Wärmerückgewinnung gleichzeitig anzuwenden, nämlich die Lösungsrückführung der reichen Lösung (15) durch den Niederdruckabsorber (7). Somit wird die im Rektifikator an den Zusatzkreis übertragene Wärme nicht mehr vollständig für einen Temperaturhub zwischen Mitteldruckniveau und Absorberniveau bereitgestellt, sondern auch reversibel zur Verminderung der von außen bereitzustellenden Energiezufuhr genutzt.

Als weitere Verfahrensvariante wird die reiche Zusatzkreislösung (24) zuerst (41) oberhalb des ersten Austauschbodens des Rektifikators geführt. Da die reiche Zusatzkreislösung (24) unterkühlt zugeführt wird, werden die aufsteigenden Arbeitsmitteldämpfe zuletzt durch die Wärmeaufnahme der reichen Zusatzkreislösung (24) rektifiziert.

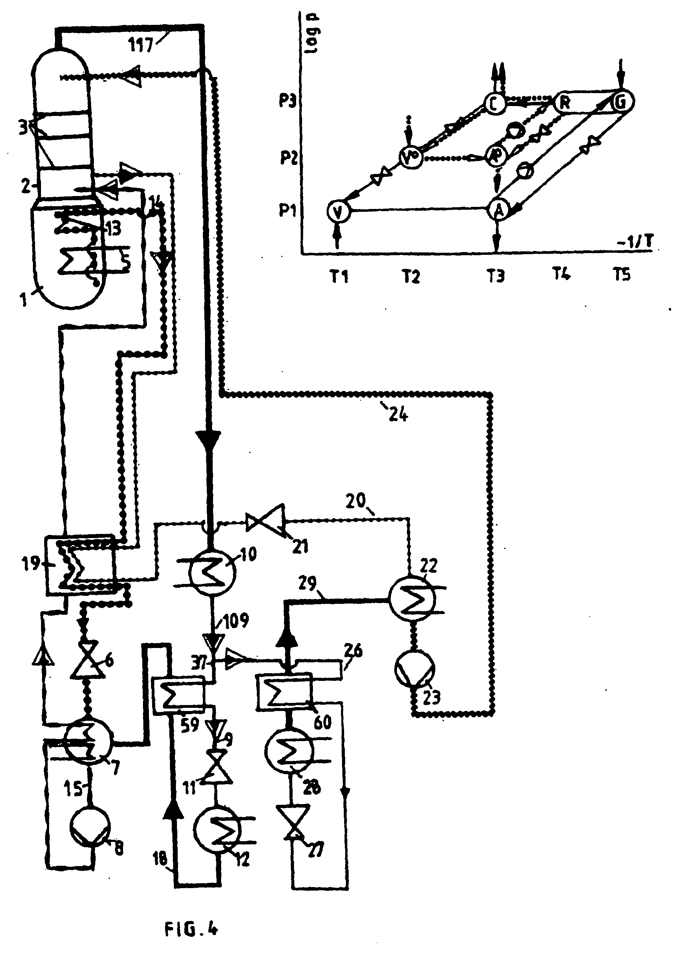

In der Figur 4 ist das bekannte Verfahren der Unterkühlung der Arbeitsmittelflüssigkeit (9) durch Niederdruckdampf (18) in einem Lösungsunterkühler (59) dargestellt. Bekanntlich wird die Kälteleistung durch die Unterkühlung des flüssigen Arbeitsmittels gesteigert. In gleicher Weise wird eine Unterkühlung der Zusatzkreisarbeitsmittelflüssigkeit (26) durch Zusatzkreismitteldruckdampf (29) in einem Zusatzkreislösungsunterkühler (60) dargestellt. In analoger Weise kann auch die Restlösung zur Unterkühlung herangezogen werden. Auf die Darstellung der Restlösungführung wurde aus Gründen der Übersichtlichkeit der Zeichnung verzichtet. Abweichend zu Figur 3 wird die reiche Zusatzkreislösung (24) ohne vorherige indirekte Wärmeabgabe in den obersten Austauschboden eingeleitet.

In der Figur 5 wird die Erfindung in einem Diagramm "Mindestrücklaufwärme q_{Rth} vs. Konzentrationsgrad ξ' der reichen Lösung" beschrieben. Infolge unvollständiger Rektifikation wird in der Praxis eine höhere Wärme benötigt. Die benötigte Mindestrücklaufwärme (q_{Rth}) bezieht sich hierbei auf 1 kg rektifizierten Dampf eines einzigen Kreislaufes. Als Arbeitsmittel ist Ammoniak und als Sorptionsmittel Wasser unterstellt. Die benötigte Mindestrücklaufwärme hängt vom angestrebten Reinheitsgrad des rektifizierten Dampfes ab - hier wird 99,8 % unterstellt. Da der Anteil des mitausgetriebenen Sorptionsmittels - hier Wasser - mit dem Druck ansteigt, erhöht sich auch die Mindestrücklaufwärme mit dem Druck. Für einen beispielhaften Druck von 10 bar ist eine Arbeitslinie eingezeichnet. Darin sind AP 1 und AP 2 zwei Arbeitspunkte. Der Arbeitspunkt AP 1 soll die Mindestrücklaufwärme eines Sorptionsprozesses zeigen, der nur aus einem einzigen Kreislauf besteht mit einer geringen Konzentration ξ' des Arbeitsmittels in der reichen Lösung - im Beispiel von 13 %.

Der Arbeitspunkt AP 2 zeigt die Mindestrücklaufwärme in der Situation des Einsatzes der Erfindung, also eines Sorptionsprozesses mit Hauptkreislauf und Zusatzkreis, allerdings ist die Mindestrücklaufwärme auf die rektifizierte Dampfmenge (1 kg) eines einzigen Kreislaufes bezogen, dessen reiche Lösung den gleich hohen Arbeitsmittelanteil aufweist wie die reiche Zusatzkreislösung. In dem gewählten Beispiel hat die reiche Lösung eine Konzentration des Arbeitsmittels von 50 % - sowohl diejenige des Zusatzkreises als auch diejenige des zum Vergleich herangezogenen einzigen Kreislaufes. Die ansonsten an den beiden Arbeitspunkten AP 1 und AP 2 vorliegenden Mindestrücklaufwärmen stellen jeweils einen energetischen Verlust dar. In vielen Anwendungsfällen wird zwar die Rücklaufwärme zur Aufwärmung der reichen Lösung verwendet. Hierbei wird die reiche Lösung vor Eintritt in den Lösungswärmetauscher mit der armen Lösung aufgewärmt. Dies ist jedoch nicht nur die einzige Möglichkeit der Wärmezufuhr. Mit der Lösungsrückführung durch die Absorber kann annähernd der selbe Effekt erreicht werden. Insofern ist nur eine scheinbare Rückgewinnung der Rücklaufwärme gegeben.

In der Figur 5 wurde als Druck 10 bar gewählt. Hier beträgt die Siedetemperatur 25 °C und die spezifische Verdampfungsenthalpie 1167 kJ/kg. Im Austreiber ist des weiteren die arme Lösung aufzuwärmen. Der Wärmebedarf liegt aber wesentlich niedriger. Die extern im Austreiber zuzuführende Wärme erhöht sich des weiteren um die Rückkühlwärme. Aus dem Vergleich mit der benötigten Rückkühlwärme - wie sie beispielhaft in der Figur 5 aufgeführt ist - kann abgeschätzt werden, welch große Verbesserung des Wirkungsgrades der Gesamtanlage die Nutzung der Rückkühlwärme haben kann.

Durch Einleitung der reichen Zusatzkreislösung wird im Rektifikator durch Stoff- und Wärmeaustausch die aufnehmbare Wärmemenge umgesetzt in Temperaturerhöhung der Zusatzkreislösung und Austreibungsarbeit von Arbeitsmitteldampf aus dessen reicher Zusatzkreislösung. Bei einem einzigen Kreislauf würde bei Übergang vom AP 1 zum AP 2 die Differenz der Mindestrücklaufwärmen nur in zusätzlich ausgetriebenen Dampf umgesetzt.

Die erfindungsgemäßen Arbeitsverfahren bei allen vier Schaltungstypen werden eingesetzt, um die verminderte Verlustgröße in energetischen Nutzen umzusetzen. Der gewonnene Vorteil kann unterschiedlicher Art sein. Ein Nutzen ist immer dadurch gegeben, dass Wärme von außen im Mitteldruckverdampfer aufgenommen wird. Wie bereits ausgeführt, ist hierbei der zu überbrückende Temperaturhub bzw. das nutzbare Druckgefälle geringer als im Hauptkreislauf. Es kann auch Wärme an die reiche Lösung übertragen werden. Hierbei fällt die durch Abkühlung der armen Zusatzkreislösung zu gewinnende Wärme in einem höheren Temperaturniveau an als diejenige aus dem Rücklaufkühler. Die Wärmeabgabe der armen Lösung an die reiche Lösung, um diese bis auf das Temperaturniveau des Hochdruckaustreibers anzuheben, fällt entsprechend geringer aus. Durch diese Verringerung der Wärmeabgabe ergibt sich die Möglichkeit, die eingesparte Menge an Wärme im Austreiber positiv zu nutzen. Hierzu wird das bekannte Verfahren der Lösungsrückführung der armen Lösung durch den Hochdruckaustreiber angewendet. Es ist allerdings erforderlich, die reiche Lösung vor Eintritt in den Lösungswärmetauscher durch Rückführung durch einen Absorber aufzuwärmen. Dies stellt ein häufig angewandtes Verfahren dar.

Für eine optimale Verbesserung des Wirkungsgrades des Gesamtkreislaufes muss der Zusatzkreis mengenmäßig so ausgelegt werden, dass er im Rektifikator die Wärmedifferenz zwischen AP und AP 2 aufnehmen kann. Infolge der unvollständigen Rektifikation ist eine Auslegung auf eine etwas größere Wärmeaufnahme als die Mindestrücklaufwärme sinnvoll. Wird die reiche Zusatzkreislösung unterkühlt in den Rektifikator eingeleitet, so kann die Verlustgröße über den Arbeitspunkt AP 2 hinaus weiter verringert werden, wobei der Zusatzkreis auf eine entsprechend größere Wärmeaufnahme ausgelegt werden muss. Diese Möglichkeit ist gegeben, indem die reiche Zusatzkreislösung (nach der Entnahme aus dem Absorber) ohne weitere Wärmezufuhr in den Rektifikator eingeleitet wird. Lässt der Anwendungsfall eine freie Wahl des Temperaturhubes zu, ist es günstig, dessen reiche Zusatzkreislösung auf einen Arbeitsmittelanteil von ca. 50 % auszulegen - bei Anwendung des Zweistoffgemisches Ammoniak und Wasser. Mit dem zusätzlichen Effekt der Unterkühlung kann dann eine gewünschte Rektifikation erreicht werden. Sind größere Temperaturhübe erwünscht, muss ein niedrigerer Anteil des Arbeitsmittels in der reichen Zusatzkreislösung gewählt werden. Es lässt sich eine gegenüber einem einzigen Kreislauf eine weitgehende Rektifizierung erreichen. Dann kann optional die Einleitung der reichen Zusatzkreislösung auch in den mittleren Teil des Rektifikators (2) erfolgen. Soll in dem Mitteldruckverdampfer im Vergleich zum Verdampfer eine größere Wärmemenge aufgenommen werden, so ist es günstig, die Flüssigkeitsmenge des Zusatzkreises über den energetisch optimalen Stand zu erhöhen. Wegen der reversiblen Wärmerückgewinnung - über den Weg Aufwärmung der armen Zusatzkreislösung im Rektifikator, Wärmeabgabe an die reiche Lösung und Rückführung der armen Lösung im Austreiber - ist ein energetischer Vorteil gegenüber einem Einkreisanlage mit lösungsseitige Hintereinanderschaltung von zwei Absorbern gegeben. Diese reversible Wärmerückgewinnung fehlt bei einer Einkreisanlage.

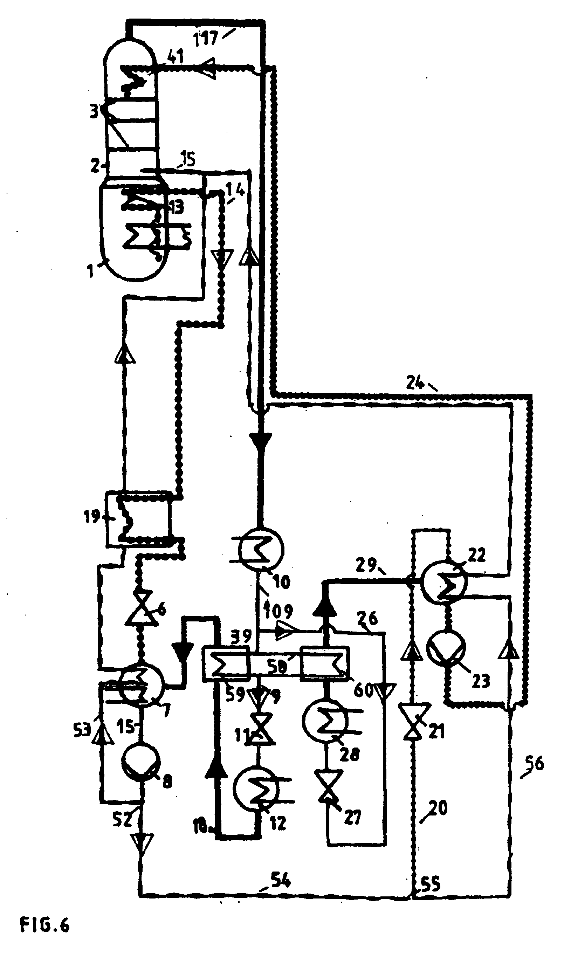

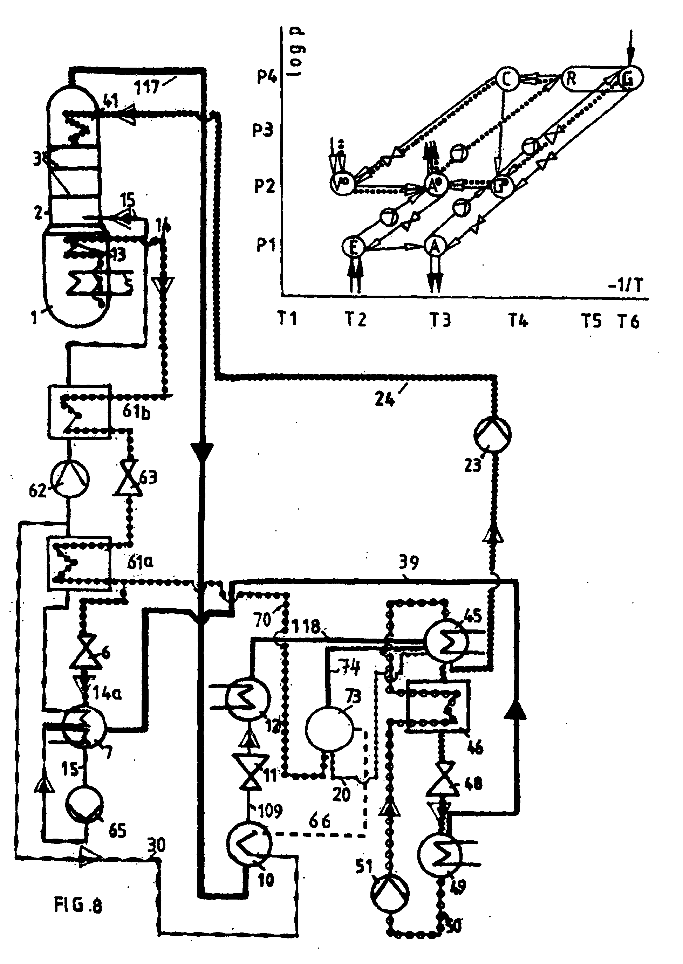

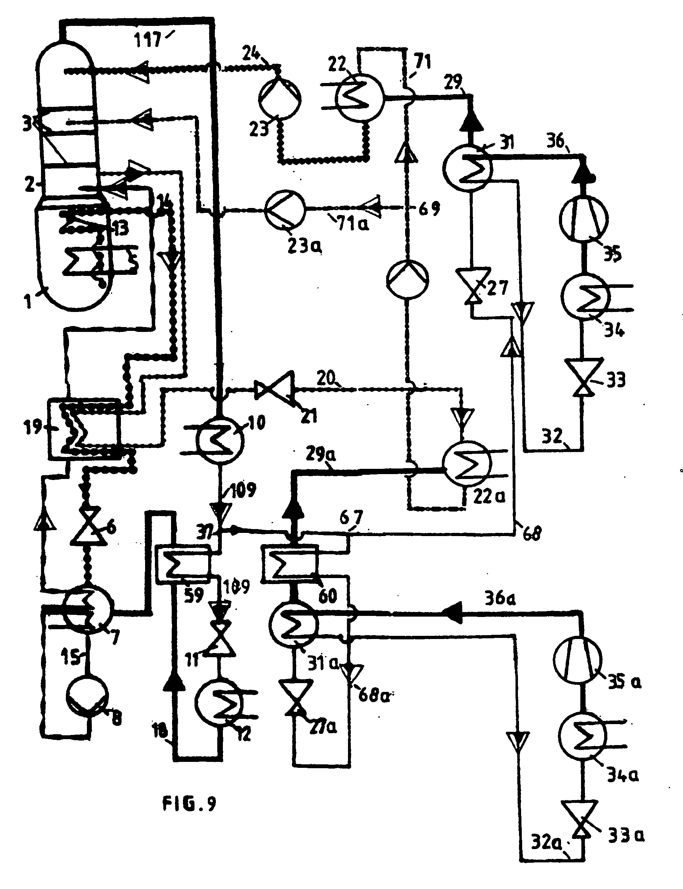

Der Zusatzkreis kann so ausgelegt werden, dass in seiner armen Zusatzkreislösung der Anteil des Arbeitsmittels nahe bei dem Anteil der reichen Lösung (siehe Figur 2 - 4 und 7) liegt oder mit diesem übereinstimmt (siehe Figur 6, 8). Bei niedrigem Arbeitsmittelanteil in der reichen Lösung und einem hohen Anteil in der reichen Zusatzkreislösung - wie in der Figur 5 als Beispiel gewählt - ergibt sich im Zusatzkreis eine große Entgasungsbreite. Dies kann dazu ausgenutzt werden, die Anreicherung in zwei Stufen mittels zwei Zusatzkreisabsorbern durchzuführen (Fig. 9). Wird jedem Zusatzkreisabsorber die gleiche Entgasungsbreite zugeteilt (im Beispiel von ξ' = 0,13 bis ξ' = 0,315 bzw. von ξ' = 0,315 bis ξ' = 0,5), so kann im Rektifikator an die erste Absorptionsstufe (im Beispiel ca. 2000 kJ/kg) eine größere Rückkühlwärme übertragen werden als im zweiten (im Beispiel ca. 300 kJ/kg).

Wie in Figur 3 dargestellt, kann durch eine zweimalige Wärmezufuhr im Zusatzkreis der gleiche Temperaturhub wie im Hauptkreislauf ebenfalls erreicht werden, allerdings ist der Nutzen etwa halbiert. Trotzdem erhöht die erfindungsgemäße Zufügung eines Zusatzkreises den Wirkungsgrad der Sorptionsanlage wesentlich, wenn die reiche Lösung relativ arm bezogen auf den angenommenen AP 2 (ξ' = 50 %) ist und damit der Rückkühlbedarf eines einzigen Kreislaufes groß ist.

Im Rektifikator muss ein großes Dampfvolumen mit einem kleinen Flüssigkeitsvolumen zum Stoff- und Wärmeaustausch gebracht werden. Durch die Einleitung der reichen Lösung in den Rektifikator erhöht sich der Flüssigkeitsanteil gegenüber dem Stand der Technik. Grundsätzlich verbessern sich hierdurch die Austauschbedingungen, so dass ein besserer Rektifikationswirkungsgrad erwartet werden kann.

In der Figur 6 wird der Zusatzkreis dahingehend erweitert, dass dessen arme Lösung in den Austreiber eingeleitet wird (siehe auch Druck-Temperatur-Diagramm zu Fig. 8). Bei dieser Kreislaufschaltung des Typs II wird grundsätzlich die arme Zusatzkreislösung (20) von der reichen Lösung (15) erst nach dem Niederdruckabsorber (7) abgetrennt. Die vom Niederdruckabsorber (7) zum Hochdruckaustreiber (1) zu transportierende Menge der reichen Lösung (15) verringert sich entsprechend. In der Figur 6 wird die reiche Hauptkreislösung (15) nach der erste Lösungspumpe (8) in einen Hauptstrom (53) und einen Nebenstrom (56) sowie in die arme Zusatzkreislösung (20) aufgeteilt. Die beiden letztgenannten Ströme werden zunächst gemeinsam (54) geleitet. Die Aufteilung erfolgt jeweils durch Ventile (52, 55). Der Nebenstrom (56) reicher Lösung wird durch den Mitteldruckabsorber (22) geleitet und aufgewärmt. Der Hauptstromstrom reicher Lösung (53) wird im Niederdruckabsorber (7) aufgewärmt und über den Lösungswärmetauscher (19) und zusammen mit dem Nebenstrom (56) reicher Lösung- in diesem Beispiel vereint (15) - dem Hochdruckaustreiber (1) zugeleitet. Die arme Zusatzkreislösung (20) wird mittels einer erste Zusatzkreisdrossel (21) auf das Mitteldruckniveau abgesenkt und in den Mitteldruckabsorber (22) geleitet.

Bezüglich der reversiblen Wärmerückgewinnung im Rektifikator ist diese Schaltung mit der in Figur 3 dargestellten und erläuterten vergleichbar. Die zusätzliche Rückgewinnung der Absorberwärme des Zusatzkreises ist dann sinnvoll anwendbar, wenn die Menge der armen Zusatzkreislösung deutlich kleiner ist als die Mengendifferenz zwischen reicher und armer Lösung.

Zusätzlich wird zur Unterkühlung der Arbeitsmittelflüssigkeit (9) auch der Zusatzkreismitteldruckdampf (29) herangezogen, indem die Arbeitsmittelflüssigkeit (9) aufgeteilt und ein Teilstrom flüssigen Arbeitsmittels (58) im Gegenstrom zum Zusatzkreismitteldruckdampf (29) in einem Zusatzkreislösungsunterkühler (60) unterkühlt wird. In der Regel ist die Kälteerzeugung in der tieferen Temperatur des Niederdruckabsorbers (7) ökonomisch wertvoller und die angeführte Unterkühlung im Hauptkreislauf statt im Zusatzkreis vorzuziehen. In analoger Weise kann auch die Restlösung zur Unterkühlung herangezogen werden. Diese Variante der Kreislaufschaltung ist bei Arbeitsstoffen anwendbar, bei denen die Wärmekapazität pro Temperaturänderungseinheit der Flüssigkeit größer ist als die des Dampfes (so bei Einsatz von Ammoniak und Wasser in jeder der vorgeschlagenen Verfahrensvariante).

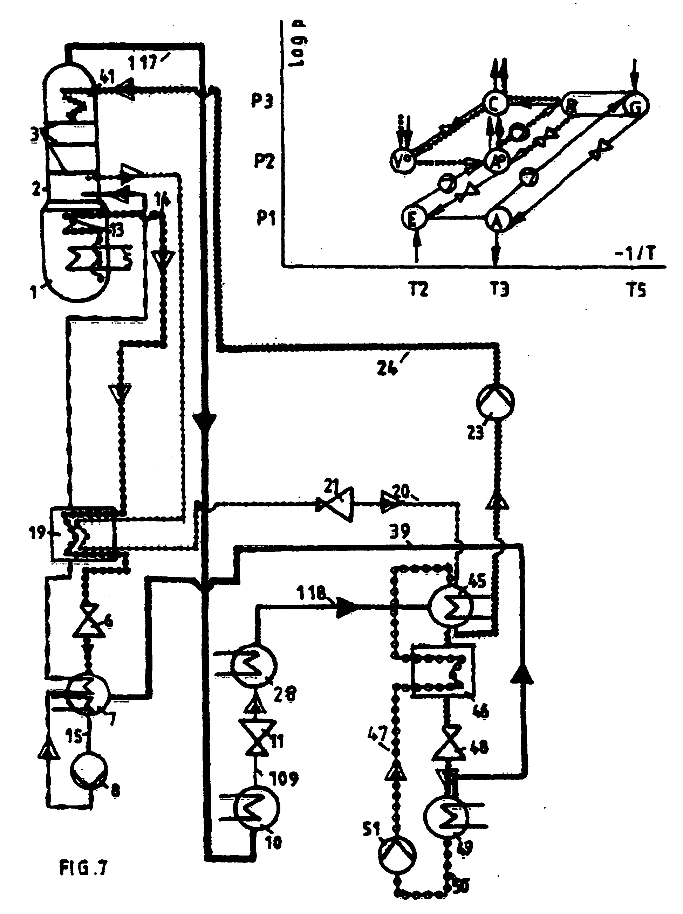

In der Figur 7 ist die bekannte zweimalige Nutzung der dem Prozess zugeführten Wärme dargestellt, indem zwischen dem Niederdruckverdampfer (12) und dem Niederdruckabsorber (7) ein Resorptionsteilkreislauf eingeschoben wird, wobei dies in einer Schaltung des Typs II vorgenommen wird.

Der zusätzliche Kreislauf besteht - entsprechend dem Stand der Technik - aus einem Resorber (45), einem Resorptionskreislösungswärmetauscher (46) und einem Entgaser (49) sowie der Leitung für die reiche Resorptionskreislösung (47) mit Resorptionskreisdrossel (48) und der Leitung für die arme Resorptionskreislösung (50) mit Resorptionskreislösungspumpe (51). Der im Entgaser (49) ausgetriebene Resorptionskreisdampf (39) wird dem unter gleichem Druck stehenden Niederdruckabsorber (7) zugeleitet und absorbiert. Dem Resorber (45) wird vom Mitteldruckverdampfer (22) Mitteldruckdampf des Hauptlaufkreises und des Zusatzkreises (118) zugeleitet. Erfindungsgemäß wird dem Resorber (45) der nahezu reine Arbeitsmittelhochdruckdampf (117) von Hauptlaufkreis und Zusatzkreis über den Weg Kondensator (10), fünfte Drossel (78), Mitteldruckverdampfer (28) als Hauptkreis-/ Zusatzkreismitteldruckdampf (118) zugeleitet. Ebenfalls wird dem Resorber die arme Zusatzkreislösung (20) zugeleitet. Die Teilung der Flüssigkeitsströme von Hauptkreislauf und Zusatzkreis erfolgen nach dem Resorber (45), indem ihm sowohl die reiche Resorptionskreislösung (47) als auch die reiche Zusatzkreislösung (24) entnommen wird.

Im Hauptkreislauf wird auf dem Temperaturniveau T2 zweimal externe Wärme zugeführt. Damit ist die Summe der Temperaturhübe groß und damit nach dem Stand der Technik die Verluste durch die Wärmeabfuhr im Rücklaufkühler ebenfalls groß. Da diese Verlustgröße zumindest weitgehend in Dampfaustreibung für den Zusatzkreislauf und in die beschriebene reversible Wärmerückgewinnung im Austreiber verwandelt werden, ist die energetische Verbesserung gegenüber dem Stand der Technik groß und dies bei einem minimalen zusätzlichen technischen Aufwand.

In der Figur 8 ist dargestellt, wie zusätzlich die zweimalige Nutzung der dem Prozess zugeführten Wärme (siehe Figur 7) um eine interne Abwärmenutzung erweitert werden kann, wobei diesmal eine Schaltung des Typs II zur Anwendung kommt. Aus dem Druck-Temperatur-Diagramm ist ersichtlich, dass das Hochdruckniveau von Austreiber (= G), Rektifikator (= R) und Kondensator (= C) auf ein höheres Druckniveau (P4) angehoben werden muss, um Wärme aus dem Kondensator (C) an einen zweiten Austreiber (= G°) im Hauptkreislauf auf einem Temperaturniveau (T4) oberhalb des Temperaturniveaus (T3) der Absorbertemperaturen (= A und A°) übertragen zu können. Dem mit dieser Wärme verstärkten Hauptkreislauf wird nur einmal zusätzlich externe Wärme im Entgaser (= E) und zwar auf dem Temperaturniveau (T2) zugeführt und die Wärmeabfuhr nach außen im Resorber (= A°) und Absorber (= A) erhöht.

Im Druck-Temperatur-Diagramm überlagern sich die Streckenführung von armer Lösung des Zusatzkreises und reicher Lösung des Hauptkreislaufes zwischen extern gespeisten (= G) und dem internen Austreiber (= G°). Wegen ihrer gegenläufigen Führung verschwindet in der praktischen Ausführung die arme Lösung des Zusatzkreises und macht sich nur in einer abgeminderten Stärke der reichen Lösung des Hauptkreislaufes bemerkbar.

Für die besagte interne Wärmeübertragung besteht nach dem Stand der Technik die Möglichkeit, Kondensation und Austreibung in einem als Kombination ausgebildeten Kondensator und Austreiber (57) durchzuführen. Es wird in der Darstellung die Anwendung des seit Jahrzehnten bekannten Calandria-Verfahrens unterstellt. Es wird aus einem Teilstrom reicher Hauptkreis-/armer Zusatzkreislösung (30) ein Zweiphasengemisch (66) aus Dampf und Flüssigkeit ausgetrieben. Das Zweiphasengemisch (66) wird einem zweiten Separator (73) zugeführt. Die aus diesem ablaufende Lösung wird teilweise als zweiter Teilstrom armer Lösung (70) abgeleitet, teilweise als arme Zusatzkreislösung (20) dem Resorber (45) zugeführt. Der im zweiten Separator (73) abgetrennte, an Arbeitsmittel reiche Mitteldruckdampf (74) wird dem Resorber (45) zugeführt und dort resorbiert. Auf eine Rektifikation nach dem zweiten Separator wird in diesem Beispiel verzichtet. Ein Teil des Zusatzkreises wird damit dampfförmig dem Resorber zugeführt. Der Resorber (45) legt den Druck für die Austreibung im kombinierten Kondensator / Austreiber (57) fest. Die besagte zusätzliche Austreibung hat zur Folge, dass die Kapazität des Resorptionsteilkreislaufes und der im Entgaser (49) ausgetriebene Resorptionskreisdampf (39) sowie der Niederdruckabsorber (7) sich entsprechend vergrößern.

Im Hauptkreislauf ergibt sich des weiteren folgende Veränderung: Es werden Lösungswärmetauscher (6 1 a, 6 1 b) in zwei unterschiedlichen Temperaturstufen gebildet. Den Lösungswärmetauscher (61a) der unteren Temperaturstufe durchlaufen erhöhte Flüssigkeitsmengen, diejenigen der oberen (61b) Temperaturstufen bleiben unverändert. Zwischen Niederdruck und Mitteldruck sind eine dritte Lösungspumpe (65) und eine vierte Drossel (64) und zwischen Mitteldruck und Hochdruck ebenfalls eine zweite Lösungspumpe (62) und eine dritte Drossel (63) notwendig. Ein Teilstrom der reichen Hauptkreis-/armer Zusatzkreislösung (30) wird mittels Ventil (72) nach dem Lösungswärmetauscher (61a) der unteren Temperaturstufe abgetrennt und in den besagten Kondensator/Austreiber-Kombination (57) zur Austreibung eingeleitet. Die aus der Kondensator/Austreiber-Kombination (57) entnommene zweite Teilstrom (70) armer Lösung wird vereint (14a) mit der vom Hochdruckaustreiber kommenden armen Lösung (14) über den Weg Lösungswärmetauscher (61a) der unteren Temperaturstufe und vierte Drossel (64) dem Niederdruckabsorber (7) zugeleitet.

Mit dieser Schaltung wird das bekannte Verfahren der internen Wärmenutzung der aus dem Kondensator abzuführenden Wärme erfindungsgemäß in das bekannte Konzept der zweimaligen Wärmenutzung mittels eines nachgeschalteten Resorptionsteilkreislaufes integriert. Besonders vorteilhaft ist, dass der apparative Aufwand hauptsächlich in Kapazitätsanpassung von Apparaten besteht, die in der Schaltung mit zweimaliger Wärmenutzung bereits eingesetzt werden. Die Kreislaufschaltung führt jedoch erst in Zusammenhang mit dem erfindungsgemäßen Zusatzkreis zu einer deutlichen Erhöhung des Wärmeverhältnisses. Andernfalls würde die Schaltung wegen der anfallenden hohen Rückkühlwärme und ihrer nur einmaligen und nicht zweimaligen Nutzung zu keiner Verbesserung des Wärmeverhältnisses gegenüber anderen bekannten Schaltungen führen.

In der Figur 9 wird dargestellt, wie die Absorption des Zusatzkreises im Rahmen des Schaltungstyps I in zwei Druckstufen durchgeführt wird, zuerst in einem Mitteldruckabsorber (22a) niedrigeren Druckes und dann in dem ersten Mitteldruckabsorber (22). Die im erst genannten Mitteldruckabsorber (22a) niedrigeren Druckes angereicherte Zusatzkreislösung (42) wird mittels zweiter Zusatzkreislösungspumpe (43) auf das höhere Mitteldruckniveau angehoben und dann mittels Ventil (69) in zwei Teilströme geteilt. Der erster Teilstrom (71) angereicherter Zusatzkreislösung wird dem Mitteldruckabsorber (22) zugeführt, der zweite (71a) Teilstrom angereicherter Zusatzkreislösung dem mittleren Teil des Rektifikators (2) zugeführt, wobei dieser Teilstrom (71a) zuvor mittels dritter Zusatzkreislösungspumpe (23a) auf Rektifikatordruck angehoben wird. Ebenso wird die nahezu reine Zusatzkreisarbeitsmittelflüssigkeit (26) mittels Ventil (67) in zwei Teilströme geteilt. Jeder Zusatzkreisteilstrom (68, 68a) wird mittels einer zweiten und dritten Zusatzkreisdrossel (27, 27a) auf den zu den jeweiligen Mitteldruckabsorbern (22, 22a) passenden Druck abgesenkt und in einem jeweiligen Kaskadenwärmetauscher eingeleitet (31, 31 a). In jedem Kaskadenwärmetauscher (31 bzw. 31 a) wird durch Wärmeaufnahme Zusatzkreismitteldruckdampf (29 bzw. 29a) erzeugt. Diese Zusatzkreismitteldruckdampfströme werden den jeweiligen Mitteldruckabsorbern (22, 22a) zugeführt und dort absorbiert. In den Kaskadenwärmetauschern (31, 31a) findet eine Wärmeübertragung vom Kondensationsvorgang des jeweiligen Kompressionskreislaufes an den jeweiligen Verdampfungsvorgang des Zusatzkreises statt. Die in dem jeweiligen Kondensationsvorgang erzeugte Kompressionskreisarbeitsmittelflüssigkeit (32, 32a) wird mit einer jeweiligen Kompressionskreisdrossel (33, 33a) auf niedrigen Druck gebracht und dem jeweiligen Kompressionskreisverdampfer (34, 34a) des jeweiligen Kompressionskreislaufes zugeleitet und dort unter Wärmeaufnahme verdampft. Der jeweilig erzeugte Kompressionskreisdampf (36, 36a) wird mit jeweiligen mechanischem Kompressor (35, 35a) auf den höheren Druck gebracht und dem erwähnten Kaskadenwärmetauscher zugeleitet (31, 31a). In den zugeordneten Kompressionskreisläufen sind weitere Verfahrensvarianten denkbar (z.B. ein gemeinsamer Verdampfer). Die Mengenaufteilung der beiden Teilströme kann unterschiedlich sein. Sie richtet sich nach den zur Figur 5 beschriebenen Wahlmöglichkeiten.

Ein lösungsseitiges Hintereinanderschalten von Zusatzabsorbem ist auch ohne zugeordneten Kompressionskreislauf anwendbar, aber dann besonders vorteilhaft, wenn die Temperaturdifferenz zwischen den Zusatzabsorbern und dem Niederdruckabsorber des Hauptkreislaufs mittels mechanischen Kompressionskreisläufen überbrückt werden soll, weil sich die aufzuwendende Kompressionsleistung und -arbeit gegenüber einem Kreislauf mit nur einem Zusatzabsorber (weiter) verringert.

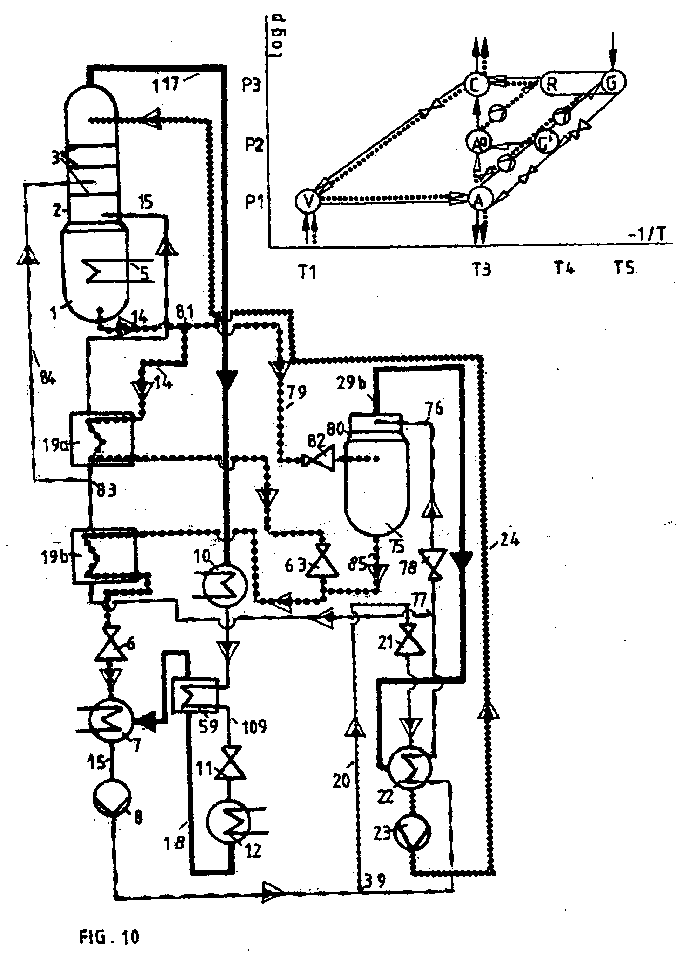

In der Figur 10 wird entsprechend einer Schaltung des Typs IV abweichend von den bisherigen Darstellungen der gesamte nahezu reine Arbeitsmittelhochdruckdampf (117) von Haupt- und Zusatzkreislauf über den Weg Kondensator (10), Lösungsunterkühler (59) und Flüssigkeitsdrossel (11) dem Niederdruckabsorber zugeleitet (7). Im Druck-Temperatur-Diagramm ist der wesentliche Unterschied zur Figur 3 erkennbar: um im Zusatzkreis aufgenommene Niedertemperaturwärme (T1) mittels einer zweimaligen Wärmezufuhr auf Kondensationsniveau (T3) anzuheben, wird nicht ein Teilstrom des Zusatzkreises von einem Mitteldruckverdampfer (= V°) zum Mitteldruckabsorber (= A°) geführt, sondern dies geschieht aus einem Mitteldruckaustreiber (= G°) des Hauptkreislaufes. Ein Mitteldruckverdampfer (= V°) wird nicht benötigt.

Dem Zusatzkreisabsorber (22) wird Mitteldruckdampf (29b) von einem ersten Separator (75) zugeleitet. Diesem ersten Separator (75) wird ein erster Teilstrom (79) armer Lösung zugeleitet, der zuvor nach Ablauf aus dem Hochdruckaustreiber (1) vom Hauptstrom (14) armer Lösung mittels Ventil (81) geregelt abgetrennt und mittels vierter Drossel (82) auf Mitteldruck abgesenkt wurde. Im ersten Separator (75) wird das durch Druckentlastung entstandene Zweiphasengemisch in einen dritten Strom (85) armer Lösung und Mitteldruckmischdampf getrennt. Zur Rektifikation des Mitteldruckdampfes wird ein erster Teilstrom (76) reicher Lösung über eine zum ersten Separator (75) zugehörige Abtriebssäule (80) in den ersten Separator (75) eingeleitet. Der erste Teilstrom (76) reicher Lösung wird vom Hauptstrom (15) der reichen Lösung nach dessen Wärmeaufnahme im Mitteldruckabsorber (22) mittels Ventil (77) abgetrennt und mittels fünfter Drossel (78) auf Mitteldruck abgesenkt. Der Hauptstrom armer Lösung (14) wird mit zweiter Drossel (63) auf Mitteldruck abgesenkt und mit der aus dem ersten Separator (75) ablaufenden dritten Strom (85) armer Lösung vereint durch den Lösungswärmetauscher (19a) des unteren Temperaturbereichs geleitet. Der Wärmetausch zwischen armer (14) und reicher Lösung (15) wird in je einem Lösungswärmetauscher des unteren Temperaturbereichs (19a) und einen des oberen Temperaturbereichs (19b) vorgenommen. Zwischen diesen beiden Lösungswärmetauschern wird mittels Ventil (83) geregelt von dem Hauptstrom reicher Lösung (15) ein zweiter Teilstrom reicher Lösung (84) abgetrennt und in den heißen Teil des Rektifikators (2) eingeleitet - hier dargestellt oberhalb des untersten Bodens (3).

Mit der in der Figur 10 dargestellten Schaltung wird Rückkühlwärme nutzbringend zur Erzeugung von Kälte auf Niederdruckniveau erzeugt. Hierzu wird eine zweimalige Wärmezufuhr benötigt. Normalerweise bedeutet eine zweimalige Wärmezufuhr auch einen doppelten Wärmebedarf. Vergleicht man das Wärmeverhältnis einer Anlage mit nur einem einzigen Kreislauf mit dem Wärmeverhältnis der Nutzung der Rückkühlwärme in dieser Schaltung des Typs IV, so wird im letzteren fast derselbe Wert erreicht.

Die Verbesserung ist auf mehrere Faktoren zurückzuführen: Der erste Faktor besteht darin, dass für die Austreibung des Zusatzkreishochdruckdampfes im Rektifikator keine Rückkühlwärme benötigt wird und damit für diesen Teil das Wärmeverhältnis deutlich besser ist als das Wärmeverhältnis eines einzigen Kreislaufs. Als zweiter Faktor wird ausgelöst durch die Vorbeileitung des ersten Teilstroms (76) der reichen Lösung an den Lösungswärmetauschern (19a, 19b). Dieser Teilstrom nimmt die Rückkühlwärme auf, die bei der Rektifikation des im ersten Separator abgetrennten Mischdampfes anfällt. Durch diese Vorbeileitung kann im Lösungswärmetauscher des unteren Temperaturbereichs (19a) die Wärmebilanz von armer und reicher Lösung weitgehend oder vollständig ausgeglichen werden. Hierdurch ist es möglich, die reiche Lösung stärker aufzuwärmen, als dies in einem einzigen Kreislauf im vergleichbaren Temperaturbereich möglich ist. Im Lösungswärmetauscher des oberen Temperaturbereichs (19b) muss von der armen Lösung (14) weniger Wärme an die reiche (15) Lösung übertragen werden als dies im vergleichbaren Temperaturbereich eines einzigen Kreislaufes der Fall wäre. Der dritte Faktor beruht auf der Einleitung von reicher Zusatzkreislauflösung (24) in den Rektifikator. Auch nach Austreibung von Zusatzkreishochdruckdampf gelangt das Zweistoffgemisch des Zusatzkreises mit einem mindestens so hohem Anteil an Arbeitsmittel in den Hochdruckaustreiber (1) wie sie die reiche Lösung (15) aufweist. Daher muss eine entsprechend kleinere Menge reicher Lösung (15) vom Niederdruckabsorber (7) in den Lösungswärmetauschern (19a und 19b) aufgewärmt werden. Die beiden letztgenannten Faktoren schaffen auf relativ hohem Temperaturniveau ein freies Wärmepotential der armen Lösung (14), das zur Erzeugung des Mitteldruckdampfes mitherangezogen wird. Als vierter Faktor ist die Vergrößerung der Entgasungsbreite im ersten Separator (75) zu nennen. Der damit verbundene geringere Lösungsumlauf ist günstig im Hinblick auf das Wärmeverhältnis und den Bauaufwand des Lösungswärmetauschers. Diesem Faktor kommt jedoch eine geringere Bedeutung zu. Somit ist in jeder der beiden genannten Wärmezufuhren zur Ausnutzung der Rückkühlwärme diese spezifisch deutlich geringer als das Wärmeverhältnis eines einzigen Kreislaufes. Somit verringert sich in einer Sorptionsanlage mit Zusatzkreis und Ausdampfung im ersten Separator (75) der negative Einfluss der Rektifikation auf das Wärmeverhältnis im Vergleich mit einer Sorptionsanlage mit nur einem einzigen Kreislauf ganz erheblich. Hierbei wird unterstellt, dass mit der Einleitung des zweiten Teilstromes (84) reicher Lösung in den heißen Teil des Rektifikators (2) dieser so ausgelegt wird, dass der Wärmebedarf für die Ausdampfung im ersten Separator in der Bilanz vollständig aus Rückkühlwärme bereit gestellt wird. Im Unterschied zur üblichen Anwendung der Rektifikation oder Teilrektifikation durch in den Rektifikator eingeleitete kalte reiche Lösung, ist in der Schaltung des Typs IV geboten, nur den ersten Schritt der Rektifikation vorzunehmen, wobei die reiche Lösung nicht wie üblich auf dem Temperaturniveau des Niederdruckabsorbers (7) sondern mit einem deutlich höheren Temperaturniveau einzuleiten ist.

Mit einer Ausnahme hat die Erfindung keine Rückwirkung auf die technische Gestaltung der einzelnen Apparate (z.B. Absorber, Austreiber, Verdampfer usw.). Grundsätzlich bekannt ist auch die Trennung von Flüssigkeit und Dampf in einem Separator oder einer Dampftrommel. Sie ist im sogenannten Calandria-Verfahren der Firma York angewendet worden, nur ist das Gemisch nicht durch Entspannung, sondern durch Wärmezufuhr erzeugt worden. Die Ausnahme stellt der Rektifikator dar: Er ist auf eine größere Flüssigkeitsmenge, bezogen auf die Dampfmenge, auszulegen. Darüber hinausgehende Festlegungen - insbesondere ob in senkrechter oder horizontaler Bauweise ausgeführt - bestehen nicht. Technische Neuentwicklungen zur Verbesserung der Austauschbedingungen sind grundsätzlich anwendbar.
- 1: Hochdruckaustreiber
- 2: Rektifikator
- 3: Rektifikatorböden
- 4: Rücklaufkühler
- 5: Wärmequelle
- 6: Flüssigkeitsdrossel
- 7: Niederdruckabsorber
- 8: erste Lösungspumpe
- 9: Arbeitsmittelflüssigkeit
- 10: Kondensator
- 11: erste Drossel
- 12: Niederdruckverdampfer
- 13: Lösungsrückführung
- 14: arme Lösung
- 14a: vergrößerter Strom armer Lösung
- 15: reiche Lösung
- 15a: vergrößerter Strom reicher Lösung
- 16: Lösungsrückführung durch Rückkühler
- 17: Hochdruckdampf
- 18: Niederdruckdampf
- 19: Lösungswärmetauscher
- 19a: Lösungswärmetauscher des unteren Temperaturbereichs
- 19b: Lösungswärmetauscher des oberen Temperaturbereichs
- 20: arme Zusatzkreislösung
- 21: erste Zusatzkreisdrossel
- 22: Mitteldruckabsorber
- 22a: Mitteldruckabsorber niedrigeren Druckes
- 23: erste Zusatzkreislösungspumpe
- 23a: dritte Zusatzkreislösungspumpe
- 24: reiche Zusatzkreislösung
- 25: Ventil
- 26: Zusatzkreisarbeitsmittelflüssigkeit
- 27: zweite Zusatzkreisdrossel
- 27b: dritte Zusatzkreisdrossel
- 28: Mitteldruckverdampfer
- 29: unterer Zusatzkreismitteldruckdampf
- 29a: Zusatzkreismitteldruckdampf
- 29b: Mitteldruckdampf
- 30: Teilstrom reicher Hauptkreis-/armer Zusatzkreislösung
- 31: erster Kaskadenwärmetauscher
- 31a: zweiter Kaskadenwärmetauscher
- 32: erste Kompressionskreisarbeitsmittelflüssigkeit
- 32a: zweite Kompressionskreisarbeitsmittelflüssigkeit
- 33: erste Kompressionskreisdrossel
- 33a: zweite Kompressionskreisdrossel
- 34: erster Kompressionskreisverdampfer
- 34a: zweiter Kompressionskreisverdampfer
- 35: erster mechanischer Kompressor
- 35a: zweiter mechanischer Kompressor
- 36: erster Kompressionskreisdampf
- 36a: zweiter Kompressionskreisdampf
- 37: Ventil
- 38: Zusatzkreisniederdruckdampf
- 39: Resorptionskreisdampf
- 40: Umwälzpumpe
- 41: Rückführung durch Rückkühler
- 42: angereicherte Zusatzkreislösung
- 43: zweite Zusatzkreislösungspumpe
- 44: Zusatzkreisniederduckabsorber
- 45: Resorber
- 46: Resorptionskreislösungswärmetauscher
- 47: reiche Resorptionskreislösung
- 48: Resorptionskreisdrossel
- 49: Entgaser
- 50: arme Resorptionskreislösung
- 51: Resorptionskreislösungspumpe
- 52: Ventil
- 53: Hauptstromstrom reicher Lösung
- 54: arme Zusatzkreislösung und Nebenstrom reicher Lösung
- 55: Ventil
- 56: Nebenstrom reicher Lösung
- 57: kombinierter Kondensator und Austreiber
- 58: Teilstrom flüssigen Arbeitsmittels
- 59: Lösungsunterkühler
- 60: Zusatzkreislösungsunterkühler
- 61a: Lösungswärmetauscher der unteren Temperaturstufe
- 61b: Lösungswärmetauscher der oberen Temperaturstufe
- 62: zweite Lösungspumpe
- 63: zweite Drossel
- 64: dritte Drossel
- 65: dritte Lösungspumpe
- 66: Zweiphasengemisch
- 67: Ventil
- 68: zweiter Teilstrom Zusatzkreisarbeitsmittelflüssigkeit
- 68a: dritter Teilstrom Zusatzkreisarbeitsmittelflüssigkeit
- 69: Ventil
- 70: zweiter Teilstrom armer Lösung
- 71: erster Teilstrom angereicherter Zusatzkreislösung
- 71 a: zweiter Teilstrom angereicherter Zusatzkreislösung
- 72: Ventil
- 73: zweiter Separator
- 74: Mitteldruckdampf
- 75: erster Separator
- 76: erster Teilstrom reicher Lösung
- 77: Ventil
- 78: fünfte Drossel
- 79: erster Teilstrom armer Lösung
- 80: Abtriebssäule
- 81: Ventil
- 82: vierte Drossel
- 83: Ventil
- 84: zweiter Teilstrom reicher Lösung
- 85: ablaufender Strom armer Lösung
- 109: Arbeitsmittelflüssigkeit von Hauptkreislauf und Zusatzkreis
- 117: Hochdruckdampf von Hauptkreislauf und Zusatzkreis
- 118: Hauptkreis/Zusatzkreismitteldruckdampf
- 209: Hauptstrom von Hauptkreis/Zusatzkreisarbeitsmittelflüssigkeit
- 226: erster Teilstrom von Zusatzarbeitsmittelflüssigkeit

## Patentansprüche

1. Arbeitsverfahren einer Sorptionsanlage für ein Zweistoffgemisch, aus Arbeitsmittel und Sorptionsmittel,
wobei das Zweistoffgemisch zur Rektifikation von durch externe Wärmezufuhr ausgetriebenen Dämpfen durch mindestens folgende Aggregate eines Hauptkreislaufs geführt wird:
• durch einen Hochdruckaustreiber (1) zur Austreibung eines Mischdampfes aus Arbeitsmittel und Sorptionsmittel aus der reichen Lösung (15),
• durch einen Rektifikator (2) zur Bildung nahezu reinen Arbeitsmittelhochdruckdampfes (17),
• durch einen Verdampfer (12) zur Erzeugung von Niederdruckdampf (18)
• durch einen Absorber (7) zur Absorption des Niederdruckdampfs (18),
• durch einen Kondensator (10) zur Kondensation des nahezu reinen Arbeitsmittelhochdruckdampfes (17),
• durch einen Lösungswärmetauscher (19) zum Wärmeaustausch zwischen armer (14) und reicher Lösung (15),
**dadurch gekennzeichnet,**
**dass** ein Teil des Zweistoffgemisches über einen Zusatzkreis geführt wird,
wobei im Rektifikator (2) die vom Hochdruckaustreiber (1) kommenden Mischdämpfe durch Wärme- und Massenaustausch mit dem im Zusatzkreis geführten Zweistoffgemisch teilweise kondensiert werden und Rücklaufflüssigkeit des Hauptkreislaufes zumindest weitgehend gebildet wird und abweichend zum Arbeitsverfahren einer Sorptionsanlage mit einem einzigen Kreislauf, bei dem Arbeitsmittelflüssigkeit aus dem Hauptkreislauf in den Rektifikator zugeführt und verdampft und gegebenenfalls auch kalte reiche Lösung zugeführt und erwärmt wird, aus dem im Zusatzkreis geführten Zweistoffgemisch Arbeitsmittelhochdruckdampf (17) ausgetrieben und das im Zusatzkreis geführte Zweistoffgemisch erwärmt wird,
wobei der Teil des Zweistoffgemisches durch mindestens folgende Aggregate im Zusatzkreis gerührt wird:
a) einen Mitteldruckverdampfer (28) zur Verdampfung der im Zusatzkreis im Kondensator (10) oder Rücklaufkühler (4) gebildeten nahezu reinen Zusatzkreisarbeitsmittelflüssigkeit (26),
b) einen Mitteldruckabsorber (22) zur Absorption des im Mitteldruckverdampfer (28) gebildeten Zusatzkreismitteldruckdampfes (29),
c) eine erste Zusatzkreisdrossel (21) zur Drosselung von armer Zusatzkreislösung (20) auf Absorptionsdruck,
d) eine erste Zusatzkreislösungspumpe (23) zur Anhebung des Druckes von reicher Zusatzkreislösung (24) auf Hochdruckaustreiberdruck,
e) eine zweite Zusatzkreisdrossel (27) zur Drosselung der nahezu reinen Zusatzkreisarbeitsmittelflüssigkeit (26) auf Verdampferdruck,
wobei das Verfahren im Zusatzkreis wie folgt betrieben wird:
f) für die reiche Zusatzkreislösung (24) wird ein höherer Anteil des Arbeitsmittels als für die reiche Lösung (15) des Hauptkreises festgelegt,
g) reiche Zusatzkreislösung (24) wird aus dem Zusatzkreis in das kalte Ende des Rektifikators (2) eingespeist,
h) arme Zusatzkreislösung (20) wird aus dem warmen Ende des Rektifikators (2) in den Zusatzkreis ausgespeist,
i) der nahezu reine Arbeitsmittelhochdruckdampf (17) im Zusatzkreis wird vom Rektifikator (2) bis zu dem Rückkühler (4) oder bis zu dem Kondensator (10) zur Kondensation geleitet,
j) die nahezu reine Zusatzkreisarbeitsmittelflüssigkeit (26) im Zusatzkreis wird vom Rückkühler (4) oder vom Kondensator (10) zum Mitteldruckverdampfer (28) geleitet,
k) der Zusatzkreismitteldruckdampf (29) im Zusatzkreis wird vom Mitteldruckverdampfer (28) zum Mitteldruckabsorber (22) geleitet,
l) die arme Zusatzkreislösung (20) im Zusatzkreis wird zu dem Mitteldruckabsorber (22) über die erste Zusatzkreisdrossel (21) geleitet,
m) die reiche Zusatzkreislösung (24) im Zusatzkreis wird unterstützt von der ersten Zusatzkreislösungspumpe (23) zurück zum Rektifikator (2) geleitet,
n) der Rektifikator (2) ist auf die Rektifikation im Gegenstrom zum Zweistoffgemisch im Zusatzkreis ausgelegt,
o) wobei der Druckunterschied zwischen Rektifikator (2) und Mitteldruckabsorber (22) kleiner als zwischen Rektifikator (2) und Niederdruckabsorber (7) eingestellt ist.

2. Arbeitsverfahren nach Anspruch 1, **dadurch gekennzeichnet, dass** der nahezu reine Arbeitsmittelhochdruckdampf (117) von Hauptkreislauf und Zusatzkreis gemeinsam vom Rektifikator (2) zu dem gemeinsam genutzten Kondensator (10) geführt werden.

3. Arbeitsverfahren nach einem der vorhergehenden Ansprüche, **dadurch gekennzeichnet, dass** die arme Zusatzkreislösung (20) in dem Lösungswärmetauscher (19) im Gegenstrom zur reichen Lösung (15) des Hauptkreislaufes abgekühlt, und die arme Lösung (14) des Hauptkreislaufes zur Wärmeabgabe durch dessen Hochdruckaustreiber (1) und die reiche Lösung (15) des Hauptkreislaufes zur Wärmeaufnahme durch den Niederdruckabsorber (7) rückgeführt (13) wird.

4. Arbeitsverfahren einer Sorptionsanlage für ein Zweistoffgemisch, aus Arbeitsmittel und Sorptionsmittel,
wobei das Zweistoffgemisch zur Rektifikation von durch externe Wärmezufuhr ausgetriebenen Dämpfen durch mindestens folgende Aggregate eines Hauptkreislaufs geführt wird:
• durch einen Hochdruckaustreiber (1) zur Austreibung eines Mischdampfes aus Arbeitsmittel und Sorptionsmittel aus der reichen Lösung (15),
• durch einen Rektifikator (2) zur Bildung nahezu reinen Arbeitsmittelhochdruckdampfes (17),
• durch einen Verdampfer (12) zur Erzeugung von Niederdruckdampf (18)
• durch einen Absorber (7) zur Absorption des Niederdruckdampfs (18),
• durch einen Kondensator (10) zur Kondensation des nahezu reinen Arbeitsmittelhochdruckdampfes (17),
• durch einen Lösungswärmetauscher (19) zum Wärmeaustausch zwischen armer (14) und reicher Lösung (15),
**dadurch gekennzeichnet,**
**dass** ein Teil des Zweistoffgemisches über einen Zusatzkreis geführt wird,
wobei im Rektifikator (2) die vom Hochdruckaustreiber (1) des Hauptkreislaufes kommenden Mischdämpfe durch Wärme- und Massenaustausch mit dem im Zusatzkreis geführten Zweistoffgemisch teilweise kondensiert werden und Rücklaufflüssigkeit des Hauptkreislaufes zumindest weitgehend gebildet wird und abweichend zum Arbeitsverfahren einer Sorptionsanlage mit einem einzigen Kreislauf, bei dem nur Arbeitsmittelflüssigkeit aus dem Hauptkreislauf in den Rektifikator zugeführt und verdampft und gegebenenfalls auch kalte reiche Lösung zugeführt und erwärmt wird, aus dem im Zusatzkreis geführten Zweistoffgemisch Arbeitsmittelhochdruckdampf (17) ausgetrieben und das im Zusatzkreis geführte Zweistoffgemisch erwärmt wird,
wobei der Teil des Zweistoffgemisches durch mindestens folgende Aggregate im Zusatzkreis geführt wird:
a) einen Mitteldruckverdampfer (28) zur Verdampfung der im Zusatzkreis im Kondensator (10) oder einem Rückkühler (4) gebildeten nahezu reinen Zusatzkreisarbeitsmittelflüssigkeit (26),
b) einen Mitteldruckabsorber (22) zur Absorption des im Mitteldruckverdampfer (28) gebildeten Zusatzkreismitteldruckdampfes (29),
c1) eine erste Zusatzkreisdrossel (21) zur Drosselung von armer Zusatzkreislösung (20) vom Hochdruckniveau auf Absorptionsdruck oder eine Zusatzkreislösungspumpe zur Anhebung vom Niederdruck auf Absorptionsdruck,
d) eine erste Zusatzkreislösungspumpe (23) zur Anhebung des Druckes von reicher Zusatzkreislösung (24) auf Hochdruckaustreiberdruck,
e) eine zweite Zusatzkreisdrossel (27a) zur Drosselung der nahezu reinen Zusatzkreisarbeitsmittelflüssigkeit (26) auf Verdampferdruck,
wobei das Verfahren im Zusatzkreis wie folgt betrieben wird:
f) für die reiche Zusatzkreislösung (24) wird ein höherer Anteil des Arbeitsmittels als für die reiche Lösung (15) des Hauptkreises festgelegt,
g) reiche Zusatzkreislösung (24) wird aus dem Zusatzkreis in das kalte Ende des Rektifikators (2) eingespeist,
h1) die arme Zusatzkreislösung (20) wird aus dem warmen Ende des Rektifikators (2) in den Hochdruckaustreiber (1) eingeleitet, und
h2) die Stoffströme von armer Zusatzkreislösung (20) und reicher Lösung (15) des Hauptkreislaufes werden aus dem Ablauf des Niederdruckabsorbers (7) oder nach dem Niederdruckabsorber (7) aufgetrennt,
i) der nahezu reine Arbeitsmittelhochdruckdampf (17) im Zusatzkreis wird vom Rektifikator (2) bis zu dem Rückkühler (4) oder bis zu dem Kondensator (10) zur Kondensation geleitet,
j) die nahezu reine Zusatzkreisarbeitsmittelflüssigkeit (26) im Zusatzkreis wird vom Rückkühler (4) oder vom Kondensator (10) zum Mitteldruckverdampfer (28) geleitet,
k) der Zusatzkreismitteldruckdampf (29) wird vom Zusatzkreisverdampfer (28) zum Mitteldruckabsorber (22) geleitet,
l1) die arme Zusatzkreislösung (20) im Zusatzkreis wird vom Niederdruckabsorber (7) zu dem Mitteldruckabsorber (22) über die erste Lösungspumpe (8) des Hauptkreislaufes und erste Zusatzkreisdrossel (21) oder eine Zusatzkreislösungspumpe geleitet,
m) die reiche Zusatzkreislösung (24) im Zusatzkreis wird unterstützt von der ersten Zusatzkreislösungspumpe (23) zurück zum Rektifikator (2) geleitet,
n) der Rektifikator (2) ist auf die Rektifikation im Gegenstrom zum Zweistotigemisch im Zusatzkreis ausgelegt,
o) wobei der Druckunterschied zwischen Rektifikator (2) und Mitteldruckabsorber (22) kleiner als zwischen Rektifikator (2) und Niederdruckabsorber (7) eingestellt ist.

5. Arbeitsverfahren nach einem der vorhergehenden Ansprüche, **dadurch gekennzeichnet, dass** die im Zusatzkreisabsorber (22) abzuführende Wärme im Gegenstrom an einen ersten vom Hauptstrom der reichen Lösung (15) des Hauptkreislaufes abgetrennten Teilstrom (56) übertragen wird.

6. Arbeitsverfahren nach einem der vorhergehenden Ansprüche, **dadurch gekennzeichnet, dass** ein Teilstrom (58) des flüssigen Arbeitsmittel des Hauptkreislaufes durch den Zusatzkreisarbeitsmitteldruckdampf (29) in einem Zusatzkreislösungsunterkühler (60) unterkühlt wird.

7. Arbeitsverfahren nach einem der vorhergehenden Ansprüche, **dadurch gekennzeichnet, dass** dem Mitteldruckverdampfer in einem als Kaskadenwärmetauscher ausgebildeten ersten Wärmetauscher (31) Kondensationswärme einer mechanischen Kompressionsanlage zugeführt wird.

8. Arbeitsverfahren einer Sorptionsanlage für ein Zweistoffgemisch, aus Arbeitsmittel und Sorptionsmittel,
wobei das Zweistoffgemisch zur Rektifikation von durch externe Wärmezufuhr ausgetriebenen Dämpfen durch mindestens folgende Aggregate eines Hauptkreislaufs geführt wird:
• durch einen Hochdruckaustreiber (1) zur Austreibung eines Mischdampfes aus Arbeitsmittel und Sorptionsmittel aus der reichen Lösung (15),
• durch einen Rektifikator (2) zur Bildung nahezu reinen Arbeitsmittelhochdruckdampfes (17),
• durch einen Verdampfer (12) zur Erzeugung von Niederdruckdampf (18),
• durch einen Absorber (7) zur Absorption des Niederdruckdampfs (18),
• durch einen Kondensator (10) zur Kondensation des nahezu reinen Arbeitsmittelhochdruckdampfes (17),
• durch einen Lösungswärmetauscher (19) zum Wärmeaustausch zwischen armer (14) und reicher Lösung (15),
**dadurch gekennzeichnet,**
**dass** ein Teil des Zweistoffgemisches über einen Zusatzkreis geführt wird,
wobei im Rektifikator (2) die vom Hochdruckaustreiber (1) des Hauptkreislaufes kommenden Mischdämpfe durch Wärme- und Massenaustausch mit dem im Zusatzkreis geführten Zweistoffgemisch teilweise kondensiert werden und Rücklaufflüssigkeit des Hauptkreislaufes zumindest weitgehend gebildet wird und abweichend zum Arbeitsverfahren einer Sorptionsanlage mit einem einzigen Kreislauf, bei dem nur Arbeitsmittelflüssigkeit aus dem Hauptkreislauf in den Rektifikator zugeführt und verdampft und gegebenenfalls auch kalte reiche Lösung zugeführt und erwärmt wird, aus dem im Zusatzkreis geführten Zweistoffgemisch Arbeitsmittelhochdruckdampf (17) ausgetrieben und das im Zusatzkreis geführte Zweistoffgemisch erwärmt wird,
aa) das flüssige Zusatzkreisarbeitsmittel nach dem Kondensator (10) in zwei Teilströme (38, 226) zum Durchlauf durch den Mitteldruckverdampfer (28) bzw. durch den Zusatzkreisniederdruckabsorber (44) geteilt und im Mitteldruckabsorber (22) wieder vereint wird,
wobei der Teil des Zweistoffgemisches durch mindestens folgende Aggregate im Zusatzkreis geführt wird:
a0) einen Mitteldruckverdampfer (28) zur Verdampfung der im erster Teilstrom des Zusatzkreises im Kondensator (10) oder einem Rückkühler (4) gebildeten nahezu reinen Zusatzkreisarbeitsmittelflüssigkeit (26),
b) einen Mitteldruckabsorber (22) zur Absorption des im Zusatzkreisverdampfer (28) gebildeten Zusatzkreismitteldruckdampfes (29),
c1) eine erste Zusatzkreisdrossel (21) zur Drosselung von armer Zusatzkreislösung (20) vom Hochdruckniveau auf Absorptionsdruck oder eine Zusatzkreislösungspumpe zur Anhebung vom Niederdruck auf Absorptionsdruck,
d) eine erste Zusatzkreislösungspumpe (23) zur Anhebung des Druckes von reicher Zusatzkreislösung (24) auf Hochdruckaustreiberdruck,
e0) eine zweite Zusatzkreisdrossel (27a) zur Drosselung der nahezu reinen Zusatzkreisarbeitsmittelflüssigkeit (26) auf den Druck des Mitteldruckverdampfers,
wobei das Verfahren im Zusatzkreis wie folgt betrieben wird:
ea) das flüssige Arbeitsmittel des Hauptkreislaufes und des zweiten Teilstroms (209) des Zusatzkreises werden gemeinsam über eine Flüssigkeitsdrossel (11) dem Niederdruckverdampfer (12) zugeleitet und dort verdampft,
eb) das Zweistoffgemisch des zweiten Teilstroms des Zusatzkreislaufes wird als Zusatzkreisniederdruckdampf (38) im Zusatikreislauf einem Zusatzniederdruckabsorber (44) zugeführt und dort von der armen Zusatzkreislösung (20) absorbiert,
ec) das Zweistoffgemisch des zweiten Teilstroms (38) im Zusatzkreis durchläuft den Zusatzkreisniederdruckabsorber (44), um die darin abzuführende Wärme an den Mitteldruckverdampfer (28) zu übertragen,
ed) die im Zusatzkreisniederdruckabsorber (44) angereicherte Zusatzkreislösung (42) wird im Zusatzkreis vom Zusatzkreisniederdruckabsorber (44) zu dem Mitteldruckabsorber (22) geleitet,
ee) die angereicherte Zusatzkreislösung (42) im Zusatzkreis wird über eine zweite Zusatzkreislösungspumpe (43) von Niederdruck auf Mitteldruck angehoben und
fa) die beiden Teilströme (38, 226) sind so bemessen, dass ein vollständiger Wärmeaustausch vom Zusatzkreisniederdruckabsorber (44) und dem Mitteldruckverdampfer (28) gegeben ist,
f) für die reiche Zusatzkreislösung (24) wird ein höherer Anteil des Arbeitsmittels als für die reiche Lösung (15) des Hauptkreises festgelegt,
g) reiche Zusatzkreislösung (24) aus dem Zusatzkreis wird in das kalte Ende des Rektifikators (2) eingespeist,
h) arme Zusatzkreislösung (20) wird aus dem warmen Ende des Rektifikators (2) in den Zusatzkreis ausgespeist oder
h1) die arme Zusatzkreislösung (20) wird aus dem warmen Ende des Rektifikators (2) in den Hochdruckaustreiber (1) eingeleitet, und
h2) die Stoffströme von armer Zusatzkreislösung (20) und reicher Lösung (15) des Hauptkreislaufes werden aus dem Ablauf des Niederdruckabsorbers (7) oder nach dem Niederdruckabsorber (7) aufgetrennt,
i) der nahezu reine Arbeitsmittelhochdruckdampf (17) im Zusatzkreis wird vom Rektifikator (2) bis zu dem Rückkühler (4) oder bis zu dem Kondensator (10) zur Kondensation geleitet,
j0) der erste Teilstrom nahezu reine Zusatzkreisarbeitsmittelflüssigkeit (26) wird vom Rückkühler (4) oder vom Kondensator (10) zum Mitteldruckverdampfer (28) geleitet,
k) der Zusatzkreismitteldruckdampf (29) wird vom Zusatzkreisverdampfer (28) zum Mitteldruckabsorber (22) geleitet,
l1) die arme Zusatzkreislösung (20) im Zusatzkreis wird vom Niederdruckabsorber (7) zu dem Mitteldruckabsorber (22) über die erste Lösungspumpe (8) des Hauptkreislaufes und erste Zusatzkreisdrossel (21) oder eine Zusatzkreislösungspumpe geleitet,
m) die reiche Zusatzkreislösung (24) im Zusatzkreis wird unterstützt von der erste Zusatzkreislösungspumpe (23) zurück zum Rektifikator (2) geleitet,
n) der Rektifikator (2) ist auf die Rektifikation im Gegenstrom zum Zweistoffgemisch im Zusatzkreis ausgelegt,
o) wobei der Druckunterschied zwischen Rektifikator (2) und Mitteldruckabsorber (22) kleiner als zwischen Rektifikator (2) und Niederdruckabsorber (7) eingestellt ist.

9. Arbeitsverfahren nach einem der vorhergehenden Ansprüche, **dadurch gekennzeichnet, dass**
• das Zweistoffgeinisch im Zusatzkreis durch mindestens einen weiteren Mitteldruckverdampfer (31a) und mindestens einen weiteren Mitteldruckabsorber (22a) sowie mindestens zwei weitere Zusatzkreislösungspumpen (43, 43a) geführt wird,
• wobei jeder als Kaskadenwärmetauscher ausbildete, hinzugefügte Mitteldruckverdampfer jeweils einen niedrigeren Druck als jeder bereits vorhandene Mitteldruckverdampfer aufweist,
• wobei die weiteren Mitteldruckverdampfer (31a) und Mitteldruckabsorber (22a) niedrigeren Druckes auf dem nahezu gleichen Druckniveau stehen,
• wobei der Strom des Zweistoffgemischs im Zusatzkreis nach jedem hinzugefügten Mitteldruckabsorber (22a) niedrigeren Druckes abgeteilt (69) wird,
• und ein erster abgeteilter Teilstrom (71) angereicherter Zusatzkreislösung mittels zweiter Zusatzkreislösungspumpe (43) auf das Druckniveau des Mitteldruckabsorbers (22) der nächst höheren Druckstufe gebracht wird und
• ein anderer abgeteilter Teilstrom angereicherter Zusatzkreislösung mittels einer dritten Zusatzkreislösungspumpe (23a) auf das Druckniveau des Rektifikators (2) gebracht wird und
• für die Einleitung eines jeden zusätzlich abgeteilten Teilstroms (71, 71a) angereicherter Zusatzkreislösung im Rektifikator eine weitere Einleitungsstelle vorgesehen ist, die jeweils im Rektifikator eine höhere Temperatur als die bereits vorhandene aufweist.

10. Arbeitsverfahren nach dem vorhergehenden Anspruch, **dadurch gekennzeichnet, dass** jedem zugefügten Mitteldruckverdampfer in einem als Kaskadenwärmetauscher ausgebildeten Wärmetauscher (31a) Kondensationswärme einer mechanischen Kompressionsanlage zugeführt wird.

11. Arbeitsverfahren nach einem der Ansprüche 1 bis 6, **gekennzeichnet durch** folgende Erweiterung des Verfahrens:
das Zweistoffgemisch durchläuft einen im Hauptkreislauf eingeschobenen Resorptionsteilkreislauf und darin mindestens folgende Aggregate:
• einen Resorber (45) zur Absorption von Mitteldruckdampf (118) des Hauptkreislaufes und des Zusatzkreises **durch** die arme Resorptionskreislösung (50) und der armen Zusatzkreislösung (20),
• einen Entgaser (49) zur Austreibung nahezu reinen Resorptionskreisdampf (39) aus der reichen Resorptionskreislösung (47),
• einen Resotptionskreislösungswärmetauscber (46) zum Wärmeaustausch zwischen armer (50) und reicher (47) Resorptionskreislösung,
• wobei Zweistoßgemische von Hauptkreislauf und Zusatzkreis gemeinsam beginnend als nahezu reiner Arbeitsmttelhochdruckdampf (117) **durch** den Kondensator (10), Mitteldruckverdampfer (28) sowie zwischengeschaltete Flüssigkeitsdrossel (11) im Hauptkreislauf und Zusatzkreis geführt und als Mitteldruckdampf (118) in den Resorber (45) geleitet werden,
• die arme Zusatzkreislösung (20) vom Rektifikator (2) zum Resorber (45) geleitet, und
• die reiche Zusatzkreistösung (24) vom Resorber (45) zum Rektifikator (2) geleitet wird.

12. Arbeitsverfahren nach Anspruch 11, **dadurch gekennzeichnet, dass**
• im Hauptkreislauf ein zweiter Austreiber (57) angeordnet ist, welcher auf denselben oder nahezu denselben Druck wie der Resorber (45) eingestellt ist,
• wobei die im Hauptkreislauf und im Zusatzkreis abzuführende Kondensationswärme an den zweiten Austreiber (57) übertragen wird, und
• das Druckniveau des Hochdruckaustreibers (1) soweit angehoben wird, dass die Kondensationswärme im Hauptkreislauf und im Zusatzkreis auf einem Temperaturniveau anfällt, dass sie im zweiten Austreiber (57) nutzbar ist,
• und der im zweiten Austreiber (57) im Hauptkreislauf ausgetriebene Mitteldruckdampf (74) des Hauptkreislaufes dem Resorber (45) zugeführt und dort absorbiert wird,
• dass die arme Hauptkreislösung (14) mit der zweiten Drossel (63) des Hauptkreislaufes auf das Druckniveau des zweiten Austreibers (57) gedrosselt, und dann mit einer dritten Drossel (64) des Hauptkreislaufes auf Niederdruck abgesenkt,
• dass die reiche Hauptkreislösung (15a) entsprechend mit einer dritten Lösungspumpe (65) des Hauptkreislaufes auf das Druckniveau des zweiten Austreibers (57) angehoben, und dann mittels einer zweiten Lösungspumpe (62) des Hauptkreislaufes auf das Druckniveau des Hochdruckaustreibers (1) angehoben wird,
• wobei Löstrngswärmetauscher (61a, 61b) zum Wärmeaustausch von armer (14, 14a) und reicher Lösung (15, 15a) des Hauptkreislaufes jeweils zwischen dem Hochtemperatumiveau und Mitteltemperaturniveau sowie zwischen Mitteltemperaturniveau und Niedertemperaturniveau angeordnet sind,
und die Aggregate (45, 46, 48, 49, 51) und Leitungen (47, 50) des Resorptionsteilkreislaufes entsprechend dem zusätzlich zugeführten Mitteldruckdampf (74) vergrößert und ebenso die Mengen der armen (50) bzw. reichen Lösung (47) des Hauptkreislaufes zwischen Niederdruckabsorber (7) und dem zweiten Austreiber (57) des Hauptkreislaufes erhöht sind.

13. Arbeitsverfahren einer Sorptionsanlage für ein Zweistoffgemisch aus Arbeitsmittel und Sorptionsmittel, wobei das Zweistoffgemisch zur Rektifikation von durch externe Wärmezufuhr ausgetriebenen Dämpfen durch mindestens folgende Aggregate eines Hauptkreislaufs geführt wird:
• durch einen Hochdruckaustreiber (1) zur Austreibung eines Mischdampfes aus Arbeitsmittel und Sorptionsmittel aus der reichen Lösung (15),
• durch einen Rektifikator (2) zur Bildung nahezu reinen Arbeitsmittelhochdmckdampfes (117),
• durch einen Verdampfer (12) zur Erzeugung von Niederdruckdampf (18)
• durch einen Absorber (7) zur Absorption des Niederdruckdampfs (18),
• durch einen Kondensator (10) zur Kondensation des nahezu reinen Arbeitsmittelhochdruckdampfes (117),
**dadurch gekennzeichnet, dass** das Zweistoffgemisch im Hauptkreislauf in einen Hauptstrom und drei Teilströme geteilt und durch mindestens folgende weiteren Aggregate im Hauptkreislauf geführt wird, wobei:
• in einem Lösungswärmetauscher (19b) des unteren Temperaturbereichs und in einem Lö• sungswärmetauscher (19a) des oberen Temperaturbereichs jeweils Wärme zwischen dem Hauptstrom armer (14) und der Hauptstrom reicher Lösung (15) ausgetauscht,
• in einem unter Mitteldruck stehenden Separator (75) ein erster Teilstrom (79) armer Lösung in Mischdampf und verbleibende Lösung getrennt wird,
• in einer Abtriebsäule (80) dieser Mischdampf im Gegenstrom zu einem ersten Teilstrom (76) unterkühlter reicher Lösung rektifiziert wird,
und wobei für die Teilströme folgende Mengen gebildet werden:
• die Menge des ersten Teilstroms (79) armer Lösung wird so festgelegt wird, dass im Separator (75) die im Mitteldruckabsorber (22) benötigte Menge an Mitteldruckdampf (29b) abgetrennt wird,
• die Menge des ersten Teilstroms (76) reicher Lösung wird so festgelegt, dass er die Rückkühlwärme aufnehmen kann, die bei der Rektifikation des im Separator (75) abgetrennten Mischdampfes anfällt,
• die Menge eines zweiten Teilstroms (84) reicher Lösung wird so festgelegt, dass der verbleibende Hauptstrom reicher Hauptkreislösung (15) von dem Hauptstrom armer Lösung (14) im Lösungswärmetauscher (19b) des oberen Temperaturniveaus bis auf Siedetemperatur erwärmt werden kann,
wobei das Verfahren im Hauptkreislauf mit folgenden Besonderheiten betrieben wird:
• x1) der erste Teilstrom (79) armer Lösung wird vom Hochdruckaustreiber (1) über eine vierte Drossel (82) im Hauptkreislauf in den Separator (75) geleitet,
• x2) im Separator (75) wird aus dem druckentlasteten ersten Teilstrom (79) armer Lösung Mischdampf abgetrennt,
• x3) der erste Teilstrom (76) reicher Lösung wird nach einer ersten Lösungspumpe (8) vom Hauptstrom der reichen Lösung abgetrennt und mittels einer fünften Drossel (78) auf das Druckniveau des Separators (75) gebracht und in die Abtriebssäule (80) eingeleitet,
• x4) der in der Abtriebssäule (80) durch Rektifikation gebildet nahezu reiner Mitteldruckdampf (29b) wird dem Mitteldruckabsorber (22) zur Absorption im Zusatzkreis zugeleitet,
• x5) die in der Abtriebssäule bei der Rektifikation gebildete Lösung wird in den Separator eingeleitet
• x6) nach dem Lösungswännetauscher (19a) des unteren Temperaturbereichs wird der zweite Teilstrom (84) reicher Hauptkreislösung (15) vom Hauptstrom abgetrennt und in den heißen Teil des Rektifikators zur Vervollständigung der Rektifikation eingeleitet,
• x7) der Hauptstrom (15) reicher Hauptkreislösung unterstützt durch die erste Lösungspumpe (8) wird unter Wärmeaufnahme über den Weg Mitteldruckabsorber (22), Lösungswärmetauscher (19a) des unteren Temperaturbereichs, Lösungswärmetauscher (19b) des oberen Temperaturbereichs in den Hochdruckaustreiber (1) geleitet,
• x8) der Hauptstrom (14) armer Lösung wird mit einer zweiten Drossel (63) auf Mitteldruck abgesenkt und mit einem aus dem Separator (75) ablaufenden Strom (85) armer Lösung vor Eintritt in den Lösungswärmetauscher (19a) des unteren Temperaturbereichs vereint und mittels einer dritten Drossel (64) vom Mitteldruckniveau auf Niederdruckniveau gedrosselt und in den Niederdruckabsorber (7) geleitet, und
dass ein Teil des Zweistoffgemisches über einen Zusatzkreis geführt wird,
wobei im Rektifikator (2) die vom Hochdruckaustreiber (1) kommenden Mischdämpfe durch Wärme- und Massenaustausch mit dem im Zusatzkreis geführten Zweistoffgemisch teilweise kondensiert werden und Rücklaufflüssigkeit des Hauptkreislaufes zumindest weitgehend gebildet wird und abweichend zum Arbeitsverfahren einer Sorptionsanlage mit einem einzigen Kreislauf, bei dem nur Arbeitsmittelflüssigkeit aus dem Hauptkreislauf in den Rektifikator zugeführt und verdampft und gegebenenfalls auch kalte reiche Lösung zugeführt und erwärmt wird, aus dem im Zusatzkreis geführten Zweistoffgemisch Arbeitsmittelhochdruckdampf (117) ausgetrieben und das im Zusatzkreis geführte Zweistoffgemisch erwärmt wird,
wobei der Teil des Zweistoffgemisches durch mindestens folgende Aggregate im Zusatzkreis geführt wird:
b1) einen Mitteldruckabsorber (22) zur Absorption des im Separator (75) gebildeten Mitteldruckdampfes (29b),
c) eine erste Zusatzkreisdrossel (21) zur Drosselung der armen Zusatzkreislösung (20) auf Absorptionsdruck,
d) eine erste Zusatzkreislösungspumpe (23) zur Anhebung des Druckes der reichen Zusatzkreislösung (24) auf Hochdruckaustreiberdruck,
wobei das Verfahren im Zusatzkreis wie folgt betrieben wird:
f) für die reiche Zusatzkreislösung (24) wird ein höherer Anteil des Arbeitsmittels als für die reiche Lösung (15) des Hauptkreislaufes gewählt,
g) reiche Zusatzkreislösung (24) wird aus dem Zusatzkreis in das kalte Ende des Rektifikators (2) eingespeist,
h1) die arme Zusatzkreislösung (20) wird aus dem warmen Ende des Rektifikators (2) in den Hochdruckaustreiber (1) eingeleitet,
h2) die Stoffströme von armer Lösung (20) im Zusatzkreis und reicher Lösung (15) des Hauptkreislaufes werden nach dem Hauptkreisabsorber (7) getrennt,
i1) der nahezu reine Arbeitsmittelhochdruckdampf (117) wird vom Rektifikator (2) bis zum Hauptkreiskondensator (10) zur Kondensation geleitet,
j1) die vereinigten nahezu reinen Arbeitsmittelflüssigkeiten von Hauptkreislauf und Zusatzkreis werden gemeinsam (109) vom Kondensator (10) über die Flüssigkeitsdrossel (11) zum Niederdruckverdampfer (12) geleitet, dort verdampft und dem Niederdruckabsorber (7) zur Absorption zugeleitet,
l1) die arme Zusatzkreislösung (20) im Zusatzkreis wird vom Niederdruckabsorber (7) zu dem Mitteldruckabsorber (22) über die erste Lösungspumpe (8) des Hauptkreislaufes und erste Zusatzkreisdrossel (21) oder eine Zusatzkreislösungspumpe geleitet,
m) die reiche Zusatzkreislösung (24) im Zusatzkreis wird unterstützt von der ersten Zusatzkreislösungspumpe (23) zurück zum Rektifikator (2) geleitet,
n) wobei der Rektifikator (2) auf die Rektifikation im Gegenstrom zum Zweistoffgemisch im Zusatzkreis ausgelegt ist,
o) und der Druckunterschied zwischen Rektifikator (2) und Mitteldruckabsorber (22) kleiner als zwischen Rektifikator (2) und Niederdruckabsorber (7) eingestellt ist.

## Claims

1. Working procedure of a sorption apparatus for a binary mixture of sorbat and sorbent, where the binary mixture for the rectification of vapors desorbed by external heat supply is conducted through at least the following aggregates of a main cycle:
• through a high-pressure desorber (1) to desorb mixed vapor of sorbat and sorbent from the strong solution (15),
• through a rectifier (2) to produce nearly pure sorbat high-pressure vapor (17),
• through an evaporator (12) to produce low-pressure vapor (18),
• through an absorber (7) to absorb the low-pressure vapor (18),
• through a condenser (10) to condense the nearly pure sorbat high-pressure vapor (17),
• through a solution heat exchanger (19) to exchange heat between weak (14) and strong solution (15),
**characterized** as follows:
part of the binary mixture passes through an additional cycle,
where the mixed vapors coming from the high-pressure desorber (1) are partly condensed in the rectifier (2) by heat and mass exchange with the binary mixture circulating in the additional cycle, and reflux liquid of the main cycle is produced, at least to a large extent, and, unlike the working procedure of a sorption apparatus using a single cycle where liquid sorbat from the main cycle is fed into the rectifier and is evaporated and where, if necessary, cold strong solution is supplied and heated up, sorbat high-pressure vapor (17) is desorbed from the binary mixture circulating in the additional cycle and the binary mixture circulating in the additional cycle is heated up,
where this part of the binary mixture is conducted at least through the following aggregates in the additional cycle:
a) an intermediate-pressure evaporator (28) to evaporate the nearly pure additional-cycle liquid sorbat (26) produced in the additional cycle in the condenser (10) or in the reflux cooler (4),
b) an intermediate-pressure absorber (22) to absorb the additional-cycle intermediate-pressure vapor (29) produced in the intermediate-pressure evaporator (28),
c) a first additional-cycle throttle valve (21) to throttle weak additional-cycle solution (20) to absorption pressure,
d) a first additional-cycle solution pump (23) to raise the pressure of strong additional-cycle solution (24) to high-pressure desorber pressure,
e) a second additional-cycle throttle valve (27) to throttle the nearly pure additional-cycle liquid sorbat (26) to evaporator pressure,
the procedure being realised in the additional cycle as follows:
f) the sorbat content fixed for the strong additional-cycle solution (24) is higher than that fixed for the strong solution (15) of the main cycle,
g) strong additional-cycle solution (24) is fed from the additional cycle into the cold end of the rectifier (2),
h) weak additional-cycle solution (20) is extracted from the hot end of the rectifier (2) into the additional cycle,
i) the nearly pure sorbat high-pressure vapor (17) in the additional cycle is conducted from the rectifier (2) up to the reflux cooler (4) or up to the condenser (10) for condensation,
j) the nearly pure additional-cycle liquid sorbat (26) in the additional cycle is conducted from the reflux cooler (4) or from the condenser (10) to the intermediate-pressure evaporator (28),
k) the additional-cycle intermediate-pressure vapor (29) in the additional cycle is conducted from the intermediate-pressure evaporator (28) to the intermediate-pressure absorber (22),
l) the weak additional-cycle solution (20) in the additional cycle is conducted to the intermediate-pressure absorber (22) via the first additional-cycle throttle valve (21),
m) the strong additional-cycle solution (24) in the additional cycle is conducted back to the rectifier (2), supported by the first additional-cycle solution pump (23),
n) the rectifier (2) is designed for rectification in countercurrent to the binary mixture in the additional cycle,
o) the pressure difference being set smaller between rectifier (2) and intermediate-pressure absorber (22) than between rectifier (2) and low-pressure absorber (7).

2. Working procedure according to claim 1, **characterised by** the fact that the nearly pure sorbat high-pressure vapor (117) of main cycle and additional cycle are jointly conducted from the rectifier (2) to the commonly used condenser (10).

3. Working procedure according to one of the preceding claims, **characterised by** the fact that the weak additional-cycle solution (20) is cooled in the solution heat exchanger (19) in countercurrent to the strong solution (15) of the main cycle, and the weak solution (14) of the main cycle is recirculated (13) through the latter's high-pressure desorber (1) for heat emission, and the strong solution (15) of the main cycle is recirculated (13) through the low-pressure absorber (7) for heat absorption.

4. Working procedure of a sorption apparatus for a binary mixture of sorbat and sorbent, where the binary mixture, for rectification of vapors desorbed by external heat supply, is conducted at least through the following aggregates of a main cycle:
• through a high-pressure desorber (1) to desorb mixed vapor of sorbat and sorbent from the strong solution (15),
• through a rectifier (2) to produce nearly pure sorbat high-pressure vapor (17),
• through an evaporator (12) to produce low-pressure vapor (18),
• through an absorber (7) to absorb the low-pressure vapor (18),
• through a condenser (10) to condense the nearly pure sorbat high-pressure vapor (17),
• through a solution heat exchanger (19) to exchange heat between weak (14) and strong solution (15),
**characterized** as follows:
part of the binary mixture passes through an additional cycle ,
where the mixed vapors coming from the high-pressure desorber (1) of the main cycle are partly condensed in the rectifier by heat and mass exchange with the binary mixture circulating in the additional cycle, and reflux liquid of the main cycle is produced, at least to a large extent, and, unlike the working procedure of a sorption apparatus using a single cycle where only liquid sorbat from the main cycle is fed into the rectifier and is evaporated and where, if necessary, also cold strong solution is supplied and heated up, liquid sorbat high-pressure vapor (17) is desorbed from the binary mixture circulating in the additional cycle and the binary mixture circulating in the additional cycle is heated up,
where this part of the binary mixture is conducted at least through the following aggregates of the additional cycle:
a) an intermediate-pressure evaporator (28) to evaporate the nearly pure additional-cycle liquid sorbat (26) produced in the additional cycle in the condenser (10) or in a reflux cooler (4),
b) an intermediate-pressure absorber (22) to absorb the additional-cycle intermediate-pressure vapor (29) produced in the intermediate-pressure evaporator (28),
c) a first additional-cycle throttle valve (21) to throttle weak additional-cycle solution (20) from high-pressure level to absorption pressure or an additional-cycle solution pump to raise from low pressure to absorption pressure,
d) a first additional-cycle solution pump (23) to raise the pressure of strong additional cycle solution (24) to high-pressure desorber pressure,
e) a second additional-cycle throttle valve (27a) to throttle the nearly pure additional-cycle liquid sorbat (26) to evaporator pressure,
the procedure being realised in the additional cycle as follows:
f) the sorbat content fixed for the strong additional-cycle solution (24) is higher than that fixed for the strong solution (15) of the main cycle,
g) strong additional-cycle solution (24) is fed from the additional cycle into the cold end of the rectifier (2),
h1) the weak additional-cycle solution (20) is fed from the hot end of the rectifier (2) into the high-pressure desorber (1), and
h2) the material streams of weak additional-cycle solution (20) and strong solution (15) of the main cycle are divided when discharged from the low-pressure absorber (7) or after the low-pressure absorber (7),
i) the nearly pure sorbat high-pressure vapor (17) in the additional cycle is conducted from the rectifier (2) up to the reflux cooler (4) or up to the condenser (10) for condensation,
j) the nearly pure additional-cycle liquid sorbat (26) in the additional cycle is conducted from the reflux cooler (4) or from the condenser (10) to the intermediate-pressure evaporator (28),
k) the additional-cycle intermediate-pressure vapor (29) is conducted from the additional-cycle evaporator (28) to the intermediate-pressure absorbe (22),
l1) the weak additional-cycle solution (20) in the additional cycle is conducted from the low-pressure absorber (7) to the intermediate-pressure absorber (22) via the first solution pump (8) of the main cycle and first additional-cycle throttle valve (21) or an additional-cycle solution pump,
m) the strong additional-cycle solution (24) in the additional cycle is conducted back to the rectifier (2), supported by the first additional-cycle solution pump (23),
n) the rectifier (2) is designed for rectification in countercurrent to the binary mixture in the additional cycle,
o) the pressure difference being set smaller between rectifier (2) and intermediate-pressure absorber (22) than between rectifier (2) and low-pressure absorber (7).

5. Working procedure according to one of the preceding claims, **characterized by** the fact that the heat to be discharged in the additional-cycle absorber (22) is transferred, in countercurrent, to a first partial stream (56) separated from the main stream of the strong solution (15) of the main cycle.

6. Working procedure according to one of the preceding claims, **characterized by** the fact that a partial stream (58) of the liquid sorbat of the main cycle is subcooled by the additional-cycle intermediate-pressure vapor (29) in an additional-cycle solution subcooler (60).

7. Working procedure according to one of the preceding claims, **characterized by** the fact that condensation heat of a mechanical compression equipment is supplied to the intermediate-pressure evaporator in a first heat exchanger (31) executed as a cascade heat exchanger.

8. Working procedure of a sorption apparatus for a binary mixture of sorbat and sorbent, where the binary mixture, for rectification of vapors desorbed by external heat supply, is conducted at least through the following aggregates of a main cycle:
• through a high-pressure desorber (1) to desorb a mixed vapor of sorbat and sorbent from the strong solution (15),
• through a rectifier (2) to produce nearly pure sorbat high-pressure vapor (17),
• through an evaporator (12) to produce low-pressure vapor (18),
• through an absorber (7) to absorb the low-pressure vapor (18),
• through a condenser (10) to condense the nearly pure sorbat high-pressure vapor (17),
• through a solution heat exchanger (19) to exchange heat between weak (14) and strong solution (15),
**characterized** as follows:
part of the binary mixture passes through an additional cycle,
where the mixed vapors coming from the high-pressure desorber (1) of the main cycle are partly condensed in the rectifier (2) by heat and mass exchange with the binary mixture circulating in the additional cycle, and reflux liquid of the main cycle is produced, at least to a large extent, and, unlike the working procedure of a sorption apparatus using a single cycle where only liquid sorbat from the main cycle is fed into the rectifier and is evaporated and, if necessary, also cold strong solution is supplied and heated up, sorbat high-pressure vapor (17) is desorbed from the binary mixture circulating in the additional cycle and the binary mixture circulating in the additional cycle is heated up,
aa) the liquid additional-cycle sorbat is divided after the condenser (10) into two partial streams (38, 226) to circulate through the intermediate-pressure evaporator (28) and through the additional-cycle low-pressure absorber (44) resp., and are re-united in the intermediate-pressure absorber (22),
where this part of the binary mixture is conducted at least through the following aggregates in the additional cycle:
a0) an intermediate-pressure evaporator (28) to evaporate the nearly pure additional-cycle liquid sorbat (26) produced in the first partial stream of the additional cycle in the condenser (10) or in a reflux cooler (4),
b) an intermediate-pressure absorber (22) to absorb the additional-cycle intermediate-pressure vapor (29) produced in the additional-cycle evaporator (28),
c1) a first additional-cycle throttle valve (21) to throttle weak additional-cycle solution (20) from high-pressure level to absorption pressure, or an additional-cycle solution pump to raise from low pressure to absorption pressure,
d) a first additional-cycle solution pump (23) to raise the pressure of strong additional-cycle solution (24) to high-pressure desorber pressure,
e0) a second additional-cycle throttle valve (27a) to throttle the nearly pure additional-cycle liquid sorbat (26) to the pressure of the intermediate-pressure evaporator,
the procedure being realised in the additional cycle a follows:
ea) the liquid sorbat of the main cycle and of the second partial stream (209) of the additional cycle are jointly conducted to the low-pressure evaporator (12), via a liquid throttle valve (11), where it is evaporated,
eb) the binary mixture of the second partial stream of the additional cycle is supplied, in the additional cycle, in the form of additional-cycle low-pressure vapor (38) to an additional-cycle low-pressure absorber (44) where it is absorbed by the weak additional-cycle solution (20),
ec) the binary mixture of the second partial stream (38) in the additional cycle circulates through the additional-cycle low-pressure absorber (44) in order to transfer the heat to be discharged here to the intermediate-pressure evaporator (28),
ed) the additional-cycle solution (42) enriched in the additional-cycle low-pressure absorber (44) is conducted in the additional cycle from the additional-cycle low-pressure absorber (44) to the intermediate-pressure absorber (22),
ee) the enriched additional-cycle solution (42) in the additional cycle is raised from low pressure to intermediate pressure by a second additional-cycle solution pump (43), and
fa) the two partial streams (38, 226) are dimensioned so as to ensure that the heat exchange of additional-cycle low-pressure absorber (44) and intermediate-pressure evaporator (28) is a complete one,
f) the sorbat content fixed for the strong additional-cycle solution (24) is higher than that fixed for the strong solution (15) of the main cycle,
g) strong additional-cycle solution (24) from the additional cycle is fed into the cold end of the rectifier (2),
h) weak additional-cycle solution (20) is fed from the hot end of the rectifier (2) into the additional cycle or
h1) the weak additional-cycle solution (20) is conducted from the hot end of the rectifier (2) into the high-pressure desorber (1), and
h2) the material streams of weak additional-cycle solution (20) and strong solution (15) of the main cycle are divided when discharged from the low-pressure absorber (7) or after the low-pressure absorber (7),
i) the nearly pure sorbat high-pressure vapor (17) in the additional cycle is conducted from the rectifier (2) up to the reflux cooler (4) or up to the condenser (10) for condensation,
j0) the first partial stream of nearly pure additional-cycle liquid sorbat (26) is conducted from the reflux cooler (4) or from the condenser (10) to the intermediate-pressure evaporator (28),
k) the additional-cycle intermediate-pressure vapor (29) is conducted from the additional-cycle evaporator (28) to the intermediate-pressure absorber (22),
l1) the weak additional-cycle solution (20) in the additional cycle is conducted from the low-pressure absorber (7) to the intermediate-pressure absorber (22), via the first solution pump (8) of the main cycle and first additional-cycle throttle valve (21) or an additional-cycle solution pump,
m) the strong additional-cycle solution (24) in the additional cycle is conducted back to the rectifier (2), supported by the first additional-cycle solution pump (23),
n) the rectifier (2) is designed for rectification in countercurrent to the binary mixture in the additional cycle,
o) the pressure difference being set smaller between rectifier (2) and intermediate-pressure absorber (22) than between rectifier (2) and low-pressure absorber (7).

9. Working procedure according to one of the preceding claims, **characterized by** the fact that
• the binary mixture in the additional cycle is conducted through at least one further intermediate-pressure evaporator (31a) and at least one further intermediate-pressure absorber (22a) as well as through at least two further additional-cycle solution pumps (43, 43a),
• where each newly added intermediate-pressure evaporator executed as cascade heat exchanger has a lower pressure than each existing intermediate-pressure evaporator,
• the newly added intermediate-pressure evaporators (31a) and intermediate-pressure absorbers (22a) of the lower pressure level are almost at the same pressure level,
• where the stream of the binary mixture in the additional cycle is separated (69) after each newly added intermediate-pressure absorber (22a) of the lower pressure level,
• and a first separated partial stream (71) of enriched additional-cycle solution is brought to the pressure level of the intermediate-pressure absorber (22) of the next-higher pressure level by means of a second additional-cycle solution pump (43), and
• another separated partial stream of enriched additional-cycle solution is brought to the pressure level of the rectifier (2) by means of a third additional-cycle solution pump (23a), and
• for the introduction of each additionally separated partial stream (71, 71a) of enriched additional-cycle solution there is a corresponding feed point in the rectifier, each of them having a higher temperature in the rectifier than the existing one.

10. Working procedure according to the preceding claim, **characterized by** the fact that condensation heat of a mechanical compression equipment is supplied to each newly added intermediate-pressure evaporator in a heat exchanger (31a) executed as cascade heat exchanger.

11. Working procedure according to one of claims 1 to 6, **characterized by** an enlarged procedure, as follows:
the binary mixture is conducted through a resorption partial cycle incorporated in the main cycle and, within it, at least through the following aggregates:
• a resorber (45) to absorb intermediate-pressure vapor (118) of the main cycle and of the additional cycle by the weak resorption-cycle solution (50) and of the weak additional-cycle solution (20),
• a degasser (49) to desorb nearly pure resorption-cycle vapor (39) from the strong resorption-cycle solution (47),
• a resorption-cycle solution heat exchanger (46) to exchange heat between weak (50) and strong (47) resorption-cycle solution,
• where binary mixtures of main cycle and additional cycle are conducted, in the form of nearly pure sorbat high-pressure vapor (117) and commonly starting, through the condenser (10), intermediate-pressure evaporator (28) as well as interposed liquid throttle valve (11) in main cycle and additional cycle, and are fed, in the form of intermediate-pressure vapor (118), into the resorber (45).
• the weak additional-cycle solution (20) is conducted from the rectifier (2) to the resorber (45), and
• the strong additional-cycle solution (24) is conducted from the resorber (45) to the rectifier (2).

12. Working procedure according to claim 11, **characterized** as follows:
• the main cycle includes a second desorber (57) which is set to the same, or nearly the same, pressure as the resorber (45),
• where the condensation heat to be discharged in the main cycle and in the additional cycle is transferred to the second desorber (57), and
• the pressure level of the high-pressure desorber (1) is raised so far as to ensure that the condensation heat in main cycle and additional cycle is obtained at a temperature level high enough to make it utilizable in the second desorber (57),
• and the intermediate-pressure vapor (74) of the main cycle desorbed in the second desorber (57) in the main cycle is conducted to the resorber (45) where it is absorbed,
• the weak main-cycle solution (14) is throttled to the pressure level of the second desorber (57) by the second throttle valve (63) of the main cycle, and is then throttled to low pressure by a third throttle valve (64) of the main cycle,
• correspondingly, the strong main-cycle solution (15a) is raised to the pressure level of the second desorber (57) by a third solution pump (65) of the main cycle, and is then raised to the pressure level of the high-pressure desorber (1) by a second solution pump (62) of the main cycle,
• where solution heat exchangers (61a, 61b) for heat exchange of weak (14, 14a) and strong solution (15, 15a) of the main cycle are located between high-temperature level and intermediate-temperature level as well as between intermediate-temperature level and low-temperature level,
and the aggregates (45, 46, 48, 49, 51) and pipelines (47, 50) of the resorption partial cycle are extended in correspondence with the additional feed of intermediate-pressure vapor (74), and, likewise, the quantities of the weak (50) and of the strong solution (47) of the main cycle are increased between low-pressure absorber (7) and the second desorber (57) of the main cycle.

13. Working procedure of a sorption apparatus for a binary mixture of sorbat and sorbent, where the binary mixture, for rectification of vapors desorbed by external heat supply, is conducted through at least the following aggregates of a main cycle:
• through a high-pressure desorber (1) to desorb mixed vapor of sorbat and sorbent from the strong solution (15),
• through a rectifier (2) to produce nearly pure sorbat high-pressure vapor (117),
• through an evaporator (12) to produce low-pressure vapor (18),
• through an absorber (7) to absorb the low-pressure vapor (18),
• through a condenser (10) to condense the nearly pure sorbat high-pressure vapor (117),
**characterized by** the fact that the binary mixture is divided in the main cycle into a main stream and three partial streams and is conducted through at least the following further aggregates in the main cycle, where:
• in a solution heat exchanger (19b) of the lower temperature range as well as in a solution heat exchanger (19a) of the upper temperature range heat is exchanged between the main stream of weak (14) and the main stream of strong solution (15),
• in a separator (75) being at intermediate pressure a first partial stream (79) of weak solution is separated into mixed vapor and remaining solution,
• in a stripping column (80) this mixed vapor is rectified in countercurrent to a first partial stream (76) of subcooled strong solution,
the quantities of the partial streams being determined as follows:
• the quantity of the first partial stream (79) of weak solution is fixed so as to ensure that the quantity of intermediate-pressure vapor (29b) required in the intermediate-pressure absorber (22) is separated in the separator (75),
• the quantity of the first partial stream (76) of strong solution is fixed so as to ensure that it can absorb the backcooling heat which is obtained from rectification of the mixed vapor separated in the separator (75),
• the quantity of a second partial stream (84) of strong solution is fixed so as to ensure that the remaining main stream of strong main-cycle solution (15) can be heated up to boiling temperature by the main stream of weak solution (14) in the solution heat exchanger (19b) of the upper temperature level,
the procedure in the main cycle having the following special features:
• x1) the first partial stream (79) of weak solution is conducted from the high-pressure desorber (1) into the separator (75) via a fourth throttle valve (82) in the main cycle,
• x2) in the separator (75) mixed vapor is separated from the balanced first partial stream (79) of weak solution,
• x3) the first partial stream (76) of strong solution is separated from the main stream of the strong solution after a first solution pump (8), is brought to the pressure level of the separator (75) by means of a fifth throttle valve (78), and is fed into the stripping column (80),
• x4) the nearly pure intermediate-pressure vapor (29b) produced in the stripping column (80) by rectification is conducted to the intermediate-pressure absorber (22) for absorption in the additional cycle,
• x5) the solution produced in the stripping column during rectification is fed into the separator
• x6) after the solution heat exchanger (19a) of the lower temperature range the second partial stream (84) of strong main-cycle solution (15) is separated from the main stream and is fed into the hot section of the rectifier, to complete rectification,
• x7) supported by the first solution pump (8), the main stream (15) of strong main-cycle solution is conducted, under heat absorption, into the high-pressure desorber (1), taking the route intermediate-pressure absorber (22), solution heat exchanger (19a) of the lower temperature range, and solution heat exchanger (19b) of the upper temperature range,
• x8) the main stream (14) of weak solution is reduced to intermediate-pressure by means of a second throttle valve (63), is united, before entering the solution heat exchanger (19a) of the lower temperature range, with a stream (85) of weak solution running off the separator (75), is throttled from intermediate-pressure level to low-pressure level by means of a third throttle valve (64), and is fed into the low-pressure absorber (7), and
part of the binary mixture passes through an additional cycle,
where the mixed vapors coming from the high-pressure desorber (1) are partly condensed in the rectifier (2) by heat and mass exchange with the binary mixture circulating in the additional cycle and reflux liquid of the main cycle is produced, at least to a large extent, and, unlike the working procedure of a sorption apparatus using a single cycle where only liquid sorbat from the main cycle is fed into the rectifier and is evaporated and where, if necessary, also cold strong solution is supplied and heated up, sorbat high-pressure vapor (117) is desorbed from the binary mixture circulating in the additional cycle and the binary mixture circulating in the additional cycle is heated up,
this part of the binary mixture being conducted at least through the following aggregates in the additional cycle:
b1) an intermediate-pressure absorber (22) to absorb the intermediate-pressure vapor (29b) produced in the separator (75),
c) a first additional-cycle throttle valve (21) to throttle the weak additional-cycle solution (20) to absorption pressure,
d) a first additional-cycle solution pump (23) to raise the pressure of the strong additional-cycle solution (24) to high-pressure desorber pressure,
the procedure being realised in the additional cycle as follows:
f) the sorbat content chosen for the strong additional-cycle solution (24) is higher than that chosen for the strong solution (15) of the main cycle,
g) strong additional-cycle solution (24) is supplied from the additional cycle into the cold end of the rectifier(2),
h1) the weak additional-cycle solution (20) is fed from the hot end of the rectifier (2) into the high-pressure desorber (1),
h2) the material streams of weak solution (20) in the additional cycle and of strong solution (15) of the main cycle are separated after the main-cycle absorber (7),
i1) the nearly pure sorbat high-pressure vapor (117) is conducted from the rectifier (2) up to the main-cycle condenser (10) for condensation,
j1) the united nearly pure sorbat liquids of main cycle and additional cycle are jointly (109) conducted from the condenser (10), via liquid throttle valve (11), to the low-pressure evaporator (12), where they evaporate, and are then conducted to the low-pressure absorber (7) for absorption,
l1) the weak additional-cycle solution (20) in the additional cycle is conducted from the low-pressure absorber (7) to the intermediate-pressure absorber (22), via the first solution pump (8) of the main cycle and first additional-cycle throttle valve (21) or an additional-cycle solution pump,
m) the strong additional-cycle solution (24) in the additional cycle is conducted back to the rectifier (2), supported by the first additional-cycle solution pump (23),
n) the rectifier (2) being designed for rectification in countercurrent to the binary mixture in the additional cycle,
o) and the pressure difference being set smaller between rectifier (2) and intermediate-pressure absorber (22) than between rectifier (2) and low-pressure absorber (7).

## Revendications

1. Procédé de mise en oeuvre d'une installation à sorption pour un mélange binaire formé d'un milieu de travail et d'un milieu de sorption,
le mélange binaire étant conduit à travers au moins les agrégats suivants d'un circuit principal pour rectifier des vapeurs dégagées par un apport de chaleur extérieur:
• à travers un générateur haute pression (1) pour expulser de la solution riche (15) une vapeur de mélange de milieu de travail et de milieu de sorption,
• à travers un rectificateur (2) pour former une vapeur haute pression de milieu de travail (17) pratiquement pure,
• à travers un évaporateur (12) pour produire une vapeur basse pression (18),
• à travers un absorbeur (7) pour absorber la vapeur basse pression (18),
• à travers un condensateur (10) pour condenser la vapeur haute pression de milieu de travail (17) pratiquement pure,
• à travers un échangeur de chaleur de solution (19) pour l'échange de chaleur entre la solution pauvre (14) et la solution riche (15),
**caractérisé par le fait**
**qu'**une partie du mélange binaire est conduite à travers un circuit additionnel,
les vapeurs de mélange venant du générateur haute pression (1) étant partiellement condensées, dans le rectificateur (2), par échange de chaleur et de masse avec le mélange binaire conduit dans le circuit additionnel et un fluide de retour du circuit principal étant formé, au moins en grande partie, et, à la différence du procédé de mise en oeuvre d'une installation de sorption comprenant un seul circuit, dans lequel un fluide de milieu de travail est amené du circuit principal dans le rectificateur et vaporisé et une solution riche froide est également amenée et chauffée, le cas échéant, une vapeur haute pression de milieu de travail (17) étant expulsée du mélange binaire conduit dans le circuit additionnel et le mélange binaire conduit dans le circuit additionnel étant chauffé,
la partie du mélange binaire étant conduite à travers au moins les agrégats suivants dans le circuit additionnel:
a) un évaporateur moyenne pression (28) pour évaporer le fluide de milieu de travail de circuit additionnel (26) pratiquement pur formé dans le condensateur (10) ou condensateur de retour (4) dans le circuit additionnel,
b) un absorbeur moyenne pression (22) pour absorber la vapeur moyenne pression de circuit additionnel (29) formée dans l'évaporateur moyenne pression (28),
c) une première bobine de circuit additionnel (21) pour ramener la solution pauvre de circuit additionnel (20) à la pression d'absorption,
d) une première pompe de solution de circuit additionnel (23) pour élever la pression de la solution riche de circuit additionnel (24) à la pression du générateur haute pression,
e) une deuxième bobine de circuit additionnel (27) pour ramener le fluide de milieu de travail de circuit additionnel (26) pratiquement pur à la pression de l'évaporateur,
le procédé étant mis en oeuvre de la manière suivante dans le circuit additionnel:
f) une proportion plus élevée du milieu de travail est fixée pour la solution riche de circuit additionnel (24) que pour la solution riche (15) du circuit principal,
g) la solution riche de circuit additionnel (24) est alimentée du circuit additionnel dans l'extrémité froide du rectificateur (2),
h) la solution pauvre de circuit additionnel (20) est déchargée de l'extrémité chaude du rectificateur (2) dans le circuit additionnel,
i) la vapeur haute pression de milieu de travail (17) pratiquement pure dans le circuit additionnel est conduite du rectificateur (2) jusqu'au condensateur de retour (4) ou jusqu'au condensateur (10) pour condenser,
j) le fluide de milieu de travail de circuit additionnel (26) pratiquement pur dans le circuit additionnel est conduit du condensateur de retour (4) ou du condensateur (10) vers l'absorbeur moyenne pression (28),
k) la vapeur moyenne pression de circuit additionnel (29) dans le circuit additionnel est conduite de l'évaporateur moyenne pression (28) vers l'absorbeur moyenne pression (22),
l) la solution pauvre de circuit additionnel (20) dans le circuit additionnel est conduite vers l'absorbeur moyenne pression (22) par le biais de la première bobine de circuit additionnel (21),
m) la solution riche de circuit additionnel (24) dans le circuit additionnel est ramenée vers le rectificateur (2) à l'aide de la première pompe de solution de circuit additionnel (23),
n) le rectificateur (2) est étudié pour la rectification à contre-courant du mélange binaire dans le circuit additionnel,
o) la différence de pression entre le rectificateur (2) et l'absorbeur moyenne pression (22) étant réglée de manière à être inférieure à ce qu'elle est entre le rectificateur (2) et l'absorbeur basse pression (7).

2. Procédé de mise en oeuvre selon la revendication 1, **caractérisé par le fait que** la vapeur haute pression de milieu de travail (117) pratiquement pure du circuit principal et du circuit additionnel est conduite collectivement du rectificateur (2) vers le condensateur (10) utilisé collectivement.

3. Procédé de mise en oeuvre selon l'une des revendications précédentes, **caractérisé par le fait que** la solution pauvre de circuit additionnel (20) est refroidie dans l'échangeur de chaleur de solution (19) à contre-courant de la solution riche (15) du circuit principal et la solution pauvre (14) du circuit principal est ramenée (13) à travers son générateur haute pression (1) pour une émission de chaleur et la solution riche (15) du circuit principal est ramenée (13) à travers l'absorbeur basse pression (7) pour une absorption de chaleur.

4. Procédé de mise en oeuvre d'une installation de sorption pour un mélange binaire formé d'un milieu de travail et d'un milieu de sorption,
le mélange binaire étant conduit à travers au moins les agrégats suivants d'un circuit principal pour rectifier des vapeurs dégagées par un apport de chaleur extérieur:
• à travers un générateur haute pression (1) pour expulser de la solution riche (15) une vapeur de mélange de milieu de travail et de milieu de sorption,
• à travers un rectificateur (2) pour former une vapeur haute pression de milieu de travail (17) pratiquement pure,
• à travers un évaporateur (12) pour produire une vapeur basse pression (18),
• à travers un absorbeur (7) pour absorber la vapeur basse pression (18),
• à travers un condensateur (10) pour condenser la vapeur haute pression de milieu de travail (17) pratiquement pure,
• à travers un échangeur de chaleur de solution (19) pour l'échange de chaleur entre la solution pauvre (14) et la solution riche (15),
**caractérisé par le fait**
**qu'**une partie du mélange binaire est conduite à travers un circuit additionnel,
les vapeurs de mélange venant du générateur haute pression (1) du circuit principal étant partiellement condensées, dans le rectificateur (2), par échange de chaleur et de masse avec le mélange binaire conduit dans le circuit additionnel et un fluide de retour du circuit principal étant formé, au moins en grande partie, et, à la différence du procédé de mise en oeuvre d'une installation de sorption comprenant un seul circuit, dans lequel seul un fluide de milieu de travail est amené du circuit principal dans le rectificateur et vaporisé et une solution riche froide est également amenée et chauffée, le cas échéant, une vapeur haute pression de milieu de travail (17) étant expulsée du mélange binaire conduit dans le circuit additionnel et le mélange binaire conduit dans le circuit additionnel étant chauffé,
la partie du mélange binaire étant conduite à travers au moins les agrégats suivants dans le circuit additionnel:
a) un évaporateur moyenne pression (28) pour évaporer le fluide de milieu de travail de circuit additionnel (26) pratiquement pur formé dans le condensateur (10) ou un condensateur de retour (4) dans le circuit additionnel,
b) un absorbeur moyenne pression (22) pour absorber la vapeur moyenne pression de circuit additionnel (29) formée dans l'évaporateur moyenne pression (28),
c1) une première bobine de circuit additionnel (21) pour ramener la solution pauvre de circuit additionnel (20) du niveau de haute pression à la pression d'absorption ou une pompe de solution de circuit additionnel pour augmenter de la basse pression à la pression de sorption,
d) une première pompe de solution de circuit additionnel (23) pour élever la pression de la solution riche de circuit additionnel (24) à la pression du générateur haute pression,
e) une deuxième bobine de circuit additionnel (27a) pour ramener le fluide de milieu de travail de circuit additionnel (26) pratiquement pur à la pression de l'évaporateur,
le procédé étant mis en oeuvre de la manière suivante dans le circuit additionnel:
f) une proportion plus élevée du milieu de travail est fixée pour la solution riche de circuit additionnel (24) que pour la solution riche (15) du circuit principal,
g) la solution riche de circuit additionnel (24) est alimentée du circuit additionnel dans l'extrémité froide du rectificateur (2),
h1) la solution pauvre de circuit additionnel (20) est introduite de l'extrémité chaude du rectificateur (2) dans le générateur haute pression (1) et
h2) les courants de matière de la solution pauvre de circuit additionnel (20) et de la solution riche (15) du circuit principal sont séparés de l'écoulement de l'absorbeur basse pression (7) ou après l'absorbeur basse pression (7),
i) la vapeur haute pression de milieu de travail (17) pratiquement pure dans le circuit additionnel est conduite du rectificateur (2) jusqu'au condensateur de retour (4) ou jusqu'au condensateur (10) pour condenser,
j) le fluide de milieu de travail de circuit additionnel (26) pratiquement pur dans le circuit additionnel est conduit du condensateur de retour (4) ou du condensateur (10) vers l'évaporateur moyenne pression (28),
k) la vapeur moyenne pression de circuit additionnel (29) est conduite de l'évaporateur de circuit additionnel (28) vers l'absorbeur moyenne pression (22),
l1) la solution pauvre de circuit additionnel (20) dans le circuit additionnel est conduite de l'absorbeur basse pression (7) vers l'absorbeur moyenne pression (22) par le biais de la première pompe de solution (8) du circuit principal et de la première bobine de circuit additionnel (21) ou d'une pompe de solution de circuit additionnel,
m) la solution riche de circuit additionnel (24) dans le circuit additionnel est ramenée vers le rectificateur (2) à l'aide de la première pompe de solution de circuit additionnel (23),
n) le rectificateur (2) est étudié pour la rectification à contre-courant du mélange binaire dans le circuit additionnel,
o) la différence de pression entre le rectificateur (2) et l'absorbeur moyenne pression (22) étant réglée de manière à être inférieure à ce qu'elle est entre le rectificateur (2) et l'absorbeur basse pression (7).

5. Procédé de mise en oeuvre selon l'une des revendications précédentes, **caractérisé par le fait que** la chaleur à dissiper dans l'absorbeur de circuit additionnel (22) est transférée à contre-courant à un premier courant partiel (56) séparé du courant principal de la solution riche (15) du circuit principal.

6. Procédé de mise en oeuvre selon l'une des revendications précédentes, **caractérisé par le fait qu'**un courant partiel (58) du milieu de travail fluide du circuit principal est sous-refroidi par la vapeur sous pression de milieu de travail de circuit additionnel (29) dans un sous-refroidisseur de solution de circuit additionnel (60).

7. Procédé de mise en oeuvre selon l'une des revendications précédentes, **caractérisé par le fait que** la chaleur de condensation d'une installation de compression mécanique est amenée à l'évaporateur moyenne pression dans un premier échangeur de chaleur (31) exécuté en tant qu'échangeur de chaleur en cascade.

8. Procédé de mise en oeuvre d'une installation de sorption pour un mélange binaire formé d'un milieu de travail et d'un milieu de sorption,
le mélange binaire étant conduit à travers au moins les agrégats suivants d'un circuit principal pour rectifier des vapeurs dégagées par un apport de chaleur extérieur:
• à travers un générateur haute pression (1) pour expulser de la solution riche (15) une vapeur de mélange de milieu de travail et de milieu de sorption,
• à travers un rectificateur (2) pour former une vapeur haute pression de milieu de travail (17) pratiquement pure,
• à travers un évaporateur (12) pour produire une vapeur basse pression (18),
• à travers un absorbeur (7) pour absorber la vapeur basse pression (18),
• à travers un condensateur (10) pour condenser la vapeur haute pression de milieu de travail (17) pratiquement pure,
• à travers un échangeur de chaleur de solution (19) pour l'échange de chaleur entre la solution pauvre (14) et la solution riche (15),
**caractérisé par le fait**
**qu'**une partie du mélange binaire est conduite à travers un circuit additionnel,
les vapeurs de mélange venant du générateur haute pression (1) du circuit principal étant partiellement condensées, dans le rectificateur (2), par échange de chaleur et de masse avec le mélange binaire conduit dans le circuit additionnel et un fluide de retour du circuit principal étant formé, au moins en grande partie, et, à la différence du procédé de mise en oeuvre d'une installation de sorption comprenant un seul circuit, dans lequel seul un fluide de milieu de travail est amené du circuit principal dans le rectificateur et vaporisé et une solution riche froide est également amenée et chauffée, le cas échéant, une vapeur haute pression de milieu de travail (17) étant expulsée du mélange binaire conduit dans le circuit additionnel et le mélange binaire conduit dans le circuit additionnel étant chauffé,
aa) le milieu de travail de circuit additionnel fluide étant divisé, après le condensateur (10), en deux courants partiels (38, 226) pour circuler à traverse l'évaporateur moyenne pression (28) resp. à travers l'absorbeur basse pression de circuit additionnel (44) et étant recombiné dans l'absorbeur moyenne pression (22),
la partie du mélange binaire étant conduite à travers au moins les agrégats suivants dans le circuit additionnel:
a0) un évaporateur moyenne pression (28) pour évaporer le fluide de milieu de travail de circuit additionnel (26) pratiquement pur formé dans le premier courant partiel du circuit additionnel dans le condensateur (10) ou un condensateur de retour (4),
b) un absorbeur moyenne pression (22) pour absorber la vapeur moyenne pression de circuit additionnel (29) formée dans l'évaporateur de circuit additionnel (28),
c1) une première bobine de circuit additionnel (21) pour ramener la solution pauvre de circuit additionnel (20) du niveau de haute pression à la pression d'absorption ou une pompe de solution de circuit additionnel pour augmenter de la basse pression à la pression d'absorption,
d) une première pompe de solution de circuit additionnel (23) pour élever la pression de la solution riche de circuit additionnel (24) à la pression du générateur haute pression,
e0) une deuxième bobine de circuit additionnel (27a) pour ramener le fluide de milieu de travail de circuit additionnel (26) pratiquement pur à la pression de l'évaporateur moyenne pression,
le procédé étant mis en oeuvre de la manière suivante dans le circuit additionnel:
ea) le milieu de travail fluide du circuit principal et du second courant partiel (209) du circuit additionnel sont amenés ensemble, par le biais d'une bobine à fluide (11), à l'évaporateur basse pression (12) où ils sont évaporés,
eb) le mélange binaire du second courant partiel du circuit additionnel est amené en tant que vapeur basse pression de circuit additionnel (38), à un absorbeur basse pression additionnel (44) dans le circuit additionnel, où il est absorbé par la solution pauvre de circuit additionnel (20),
ec) le mélange binaire du second courant partiel (38) dans le circuit additionnel traverse l'absorbeur basse pression de circuit additionnel (44) pour transférer la chaleur à dissiper qu'il contient à l'évaporateur moyenne pression (28),
ed) la solution de circuit additionnel (42) enrichie dans l'absorbeur basse pression de circuit additionnel (44) est conduite, dans le circuit additionnel, de l'absorbeur basse pression de circuit additionnel (44) vers l'absorbeur moyenne pression (22),
ee) la pression de la solution enrichie de circuit additionnel (42) dans le circuit additionnel est élevée de la basse pression à la moyenne pression par le biais d'une deuxième pompe de solution de circuit additionnel (43) et
fa) les deux courants partiels (38, 226) sont dimensionnés de manière à ce qu'un échange de chaleur complet soit obtenu par l'absorbeur basse pression de circuit additionnel (44) et l'évaporateur moyenne pression (28),
f) une proportion plus élevée du milieu de travail est fixée pour la solution riche de circuit additionnel (24) que pour la solution riche (15) du circuit principal,
g) la solution riche de circuit additionnel (24) est alimentée du circuit additionnel dans l'extrémité froide du rectificateur (2),
h) la solution pauvre de circuit additionnel (20) est déchargée de l'extrémité chaude du rectificateur (2) dans le circuit additionnel ou
h1) la solution pauvre de circuit additionnel (20) est introduite de l'extrémité chaude du rectificateur (2) dans le générateur haute pression (1) et
h2) les courants de matière de la solution pauvre de circuit additionnel (20) et de la solution riche (15) du circuit principal sont séparés de l'écoulement de l'absorbeur basse pression (7) ou après l'absorbeur basse pression (7),
i) la vapeur haute pression de milieu de travail (17) pratiquement pure dans le circuit additionnel est conduite du rectificateur (2) jusqu'au condensateur de retour (4) ou jusqu'au condensateur (10) pour condenser,
j0) le premier courant partiel du fluide de milieu de travail de circuit additionnel (26) pratiquement pur est conduit du condensateur de retour (4) ou du condensateur (10) vers l'évaporateur moyenne pression (28),
k) la vapeur moyenne pression de circuit additionnel (29) est conduite de l'évaporateur de circuit additionnel (28) vers l'absorbeur moyenne pression (22),
l1) la solution pauvre de circuit additionnel (20) dans le circuit additionnel est conduite de l'absorbeur basse pression (7) vers l'absorbeur moyenne pression (22) par le biais de la première pompe de solution (8) du circuit principal et de la première bobine de circuit additionnel (21) ou d'une pompe de solution de circuit additionnel,
m) la solution riche de circuit additionnel (24) dans le circuit additionnel est ramenée vers le rectificateur (2) à l'aide de la première pompe de solution de circuit additionnel (23),
n) le rectificateur (2) est étudié pour la rectification à contre-courant du mélange binaire dans le circuit additionnel,
o) la différence de pression entre le rectificateur (2) et l'absorbeur moyenne pression (22) étant réglée de manière à être inférieure à ce qu'elle est entre le rectificateur (2) et l'absorbeur basse pression (7).

9. Procédé de mise en oeuvre selon l'une des revendications précédentes, **caractérisé par le fait que**
• le mélange binaire dans le circuit additionnel est conduit à travers au moins un évaporateur moyenne pression supplémentaire (31a) et au moins un absorbeur moyenne pression supplémentaire (22a) ainsi qu'au moins deux pompes de solution de circuit additionnel supplémentaires (43, 43a),
• chaque évaporateur moyenne pression ajouté exécuté en tant qu'échangeur de chaleur en cascade présentant à chaque fois une pression plus basse que chaque évaporateur moyenne pression déjà présent,
• l'évaporateur moyenne pression (31a) et l'absorbeur moyenne pression (22a) supplémentaires de pression plus basse ayant à peu près le même niveau de pression,
• le courant du mélange binaire dans le circuit additionnel étant divisé (69) après chaque absorbeur moyenne pression (22a) de pression plus basse ajouté,
• et un premier courant partiel divisé (71) de solution enrichie de circuit additionnel étant amené au niveau de pression de l'absorbeur moyenne pression (22) du palier de pression supérieur suivant au moyen d'une deuxième pompe de solution de circuit additionnel (43) et
• un autre courant partiel divisé de solution enrichie de circuit additionnel étant amené au niveau de pression du rectificateur (2) au moyen d'une troisième pompe de solution de circuit additionnel (23a) et
• pour l'introduction de chaque courant partiel divisé supplémentaire (71, 71a) de solution enrichie de circuit additionnel, on prévoit dans le rectificateur un point d'introduction supplémentaire qui présente à chaque fois, dans le rectificateur, une température supérieure à celle qui existe déjà.

10. Procédé de mise en oeuvre selon la revendication précédente, **caractérisé par le fait que** la chaleur de condensation d'une installation de compression mécanique est amenée à chaque évaporateur moyenne pression ajouté dans un échangeur de chaleur (31a) exécuté en tant qu'échangeur de chaleur en cascade.

11. Procédé de mise en oeuvre selon l'une des revendications 1 à 6, **caractérisé par** l'extension suivante du procédé:
le mélange binaire traverse un circuit partiel de résorption inséré dans le circuit principal et au moins les agrégats suivant dans ce circuit:
• un résorbeur (45) pour absorber la vapeur moyenne pression (118) du circuit principal et du circuit additionnel grâce à la solution pauvre de circuit de résorption (50) et à la solution pauvre de circuit additionnel (20),
• un dégazeur (49) pour expulser la vapeur de circuit de résorption (39) pratiquement pure de la solution riche de circuit de résorption (47),
• un échangeur de chaleur de solution de circuit de résorption (46) pour l'échange de chaleur entre la solution pauvre (50) et la solution riche (47) de circuit de résorption,
• des mélanges binaires du circuit principal et du circuit additionnel étant conduits ensemble, au début sous forme de vapeur haute pression de milieu de travail (117) pratiquement pure, à travers le condensateur (10), l'évaporateur moyenne pression (28) et une bobine à fluide intercalée (11) dans le circuit principal et le circuit additionnel et étant conduits dans le résorbeur (45) en tant que vapeur moyenne pression (118),
• la solution pauvre de circuit additionnel (20) est conduite du rectificateur (2) vers le résorbeur (45) et
• la solution riche de circuit additionnel (24) est conduite du résorbeur (45) vers le rectificateur (2).

12. Procédé de mise en oeuvre selon la revendication 11, **caractérisé par le fait que**
• un second générateur (57) est situé dans le circuit principal, lequel générateur est réglé à la même pression ou pratiquement la même pression que le résorbeur (45),
• la chaleur de condensation à dissiper dans le circuit principal et dans le circuit additionnel étant transférée au second générateur (57) et
• le niveau de pression du générateur haute pression (1) est élevé jusqu'à ce que la chaleur de condensation dans le circuit principal et dans le circuit additionnel aboutisse à un niveau de température tel qu'il soit utilisable dans le second générateur (57)
• et la vapeur moyenne pression (74) du circuit principal expulsée dans le second générateur (57) dans le circuit principal est amenée au résorbeur (45) où elle est absorbée,
• **par le fait que** la solution pauvre de circuit principal (14) est ramenée, au moyen de la deuxième bobine (63) du circuit principal, au niveau de pression du second générateur (57), puis abaissée à la basse pression au moyen d'une troisième bobine (64) du circuit principal,
• **par le fait que** la solution riche de circuit principal (15a) est élevée en conséquence, grâce à une troisième pompe de solution (65) du circuit principal, au niveau de pression du second générateur (57), puis élevée au niveau de pression du générateur haute pression (1) grâce à une deuxième pompe de solution (62) du circuit principal,
• des échangeurs de chaleur de solution (61a, 61b) pour l'échange de chaleur de solution pauvre (14, 14a) et de solution riche (15, 15a) du circuit principal étant disposés à chaque fois entre le niveau de température élevée et le niveau de température moyenne ainsi qu'entre le niveau de température moyenne et le niveau de basse température,
et les agrégats (45, 46, 48, 49, 51) et les conduites (47, 50) du circuit partiel de résorption sont agrandis en fonction de l'arrivée de vapeur moyenne pression supplémentaire (74) et les quantités de la solution pauvre (50) resp. solution riche (47) du
circuit principal entre l'absorbeur basse pression (7) et le second générateur (57) du circuit principal sont également augmentées.

13. Procédé de mise en oeuvre d'une installation de sorption pour un mélange binaire formé d'un milieu de travail et d'un milieu de sorption, le mélange binaire étant conduit à travers au moins les agrégats suivants d'un circuit principal pour rectifier des vapeurs dégagées par un apport de chaleur extérieur:
• à travers un générateur haute pression (1) pour expulser de la solution riche (15) une vapeur de mélange de milieu de travail et de milieu de sorption,
• à travers un rectificateur (2) pour former une vapeur haute pression de milieu de travail (117) pratiquement pure,
• à travers un évaporateur (12) pour produire une vapeur basse pression (18),
• à travers un absorbeur (7) pour absorber la vapeur basse pression (18),
• à travers un condensateur (10) pour condenser la vapeur haute pression de milieu de travail (117) pratiquement pure,
**caractérisé par le fait que** le mélange binaire dans le circuit principal est divisé en un courant principal et trois courants partiels et conduit à travers au moins les agrégats supplémentaires suivants dans le circuit principal,
• de la chaleur étant échangée à chaque fois entre le courant principal de solution pauvre (14) et le courant principal de solution riche (15) dans un échangeur de chaleur de solution (19b) du domaine de température inférieur et dans un échangeur de chaleur de solution (19a) du domaine de température supérieur,
• un premier courant partiel (79) de solution pauvre étant séparé en vapeur de mélange et solution résiduelle dans un séparateur (75) à moyenne pression,
• cette vapeur de mélange étant rectifiée, dans une colonne d'entraînement (80), à contre-courant d'un premier courant partiel (76) de solution riche sous-refroidie,
et les quantités suivantes étant formées pour les courants partiels:
• la quantité du premier courant partiel (79) de solution pauvre est fixée de manière à ce que la quantité de vapeur moyenne pression (29b) nécessaire dans l'absorbeur moyenne pression (22) soit séparée dans le séparateur (75),
• la quantité du premier courant partiel (76) de solution riche est fixée de manière à ce qu'il puisse absorber la chaleur de refroidissement de retour qui est produite lors de la rectification de la vapeur de mélange séparée dans le séparateur (75),
• la quantité d'un second courant partiel (84) de solution riche est fixée de manière à ce que le courant principal résiduel de solution riche de circuit principal (15) puisse être chauffé jusqu'à la température d'ébullition par le courant principal de solution pauvre (14) dans l'échangeur de chaleur de solution (19b) du niveau de température supérieur,
le procédé étant mis en oeuvre dans le circuit principal avec les particularités suivantes:
• x1) le premier courant partiel (79) de solution pauvre est conduit du générateur haute pression (1) dans le séparateur (75) par le biais d'une quatrième bobine (82) dans le circuit principal,
• x2) de la vapeur de mélange est séparée du premier courant partiel (79) de solution pauvre détendu dans le séparateur (75),
• x3) le premier courant partiel (76) de solution riche est séparé du courant principal de la solution riche après une première pompe de solution (8) et amené au niveau de pression du séparateur (75) au moyen d'une cinquième bobine (78) et introduit dans la colonne d'entraînement (80),
• x4) la vapeur moyenne pression (29b) pratiquement pure formée par rectification dans la colonne d'entraînement (80) est amenée à l'absorbeur moyenne pression (22) en vue d'une absorption dans le circuit additionnel,
• x5) la solution formée dans la colonne d'entraînement lors de la rectification est introduite dans le séparateur,
• x6) après l'échangeur de chaleur de solution (19a) du domaine de température inférieur, le second courant partiel (84) de solution riche de circuit principal (15) est séparé du courant principal et introduit dans la partie chaude du rectificateur pour compléter la rectification,
• x7) le courant principal (15) de solution riche de circuit principal est conduit dans le générateur haute pression (1), avec l'aide de la première pompe de solution (8), en empruntant le chemin passant par l'absorbeur moyenne pression (22), l'échangeur de chaleur de solution (19a) du domaine de température inférieur, l'échangeur de chaleur de solution (19b) du domaine de température supérieur, tout en absorbant de la chaleur,
• x8) le courant principal (14) de solution pauvre est abaissé à la moyenne pression grâce à une deuxième bobine (63) et combiné à un courant (85) de solution pauvre sortant du séparateur (75) avant d'entrer dans l'échangeur de chaleur de solution (19a) du domaine de température inférieur et il est ramené du niveau de moyenne pression au niveau de basse pression au moyen d'une troisième bobine (64) et conduit dans l'absorbeur basse pression (7) et
**par le fait qu'**une partie du mélange binaire est conduite à travers un circuit additionnel,
les vapeurs de mélange venant du générateur haute pression (1) étant partiellement condensées, dans le rectificateur (2), par échange de chaleur et de masse avec le mélange binaire conduit dans le circuit additionnel et un fluide de retour du circuit principal étant formé, au moins en grande partie, et, à la différence du procédé de mise en oeuvre d'une installation de sorption comprenant un seul circuit, dans lequel seul un fluide de milieu de travail est amené du circuit principal dans le rectificateur et vaporisé et une solution riche froide est également amenée et chauffée, le cas échéant, une vapeur haute pression de milieu de travail (117) étant expulsée du mélange binaire conduit dans le circuit additionnel et le mélange binaire conduit dans le circuit additionnel étant chauffé,
la partie du mélange binaire étant conduite à travers au moins les agrégats suivants dans le circuit additionnel:
b1) un absorbeur moyenne pression (22) pour absorber la vapeur moyenne pression (29b) formée dans le séparateur (75),
c) une première bobine de circuit additionnel (21) pour ramener la solution pauvre de circuit additionnel (20) à la pression d'absorption,
d) une première pompe de solution de circuit additionnel (23) pour élever la pression de la solution riche de circuit additionnel (24) à la pression du générateur haute pression,
le procédé étant mis en oeuvre de la manière suivante dans le circuit additionnel:
f) une proportion plus élevée du milieu de travail est choisie pour la solution riche de circuit additionnel (24) que pour la solution riche (15) du circuit principal,
g) la solution riche de circuit additionnel (24) est alimentée du circuit additionnel dans l'extrémité froide du rectificateur (2),
h1) la solution pauvre de circuit additionnel (20) est introduite de l'extrémité chaude du rectificateur (2) dans le générateur haute pression (1),
h2) les courants de matière de solution pauvre (20) dans le circuit additionnel et de solution riche (15) du circuit principal sont séparés après l'absorbeur de circuit principal (7),
i1) la vapeur haute pression de milieu de travail (117) pratiquement pure est conduite du rectificateur (2) jusqu'au condensateur de circuit principal (10) pour condenser,
j1) les fluides de milieu de travail pratiquement purs combinés du circuit principal et du circuit additionnel sont conduits ensemble (109), par le biais de la bobine à fluide (11), du condensateur (10) vers l'évaporateur basse pression (12) où ils sont évaporés et amenés à l'absorbeur basse pression (7) en vue d'une absorption,
l1) la solution pauvre de circuit additionnel (20) dans le circuit additionnel est conduite de l'absorbeur basse pression (7) vers l'absorbeur moyenne pression (22) par le biais de la première pompe de solution (8) du circuit principal et de la première bobine de circuit additionnel (21) ou d'une pompe de solution de circuit additionnel,
m) la solution riche de circuit additionnel (24) dans le circuit additionnel est ramenée vers le rectificateur (2) à l'aide de la première pompe de solution de circuit additionnel (23),
n) le rectificateur (2) étant étudié pour la rectification à contre-courant du mélange binaire dans le circuit additionnel,
o) et la différence de pression entre le rectificateur (2) et l'absorbeur moyenne pression (22) étant réglée de manière à être inférieure à ce qu'elle est entre le rectificateur (2) et l'absorbeur basse pression (7).
